(19) Europäisches Patentamt
European Patent Office
Office européen des brevets

(11) **EP 1 894 656 A2**

(12) **EUROPEAN PATENT APPLICATION**

(43) Date of publication:
05.03.2008 Bulletin 2008/10

(51) Int Cl.:
*B23H 5/08* (2006.01)  *B23H 5/12* (2006.01)
*C25F 7/00* (2006.01)  *C25F 3/16* (2006.01)

(21) Application number: 07017294.5

(22) Date of filing: 04.09.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 04.09.2006 JP 2006239347
19.01.2007 JP 2007009849
02.07.2007 JP 2007173908

(71) Applicant: EBARA CORPORATION
Ohta-ku,
Tokyo (JP)

(72) Inventors:
• Kodera, Akira
Fujisawa-shi
Kanagawa-ken (JP)

• Toma, Yasushi
Fujisawa-shi
Kanagawa-ken (JP)
• Suzuki, Tsukuru
Fujisawa-shi
Kanagawa-ken (JP)
• Saito, Takayuki
Fujisawa-shi
Kanagawa-ken (JP)
• Kobata, Itsuki
Tokyo (JP)

(74) Representative: Wagner, Karl H.
WAGNER & GEYER
Patentanwälte
Gewürzmühlstrasse 5
80538 München (DE)

(54) **Electrolytic liquid for electrolytic polishing and electrolytic polishing method**

(57) An electrolytic liquid is used for electrolytic polishing which can provide a processed surface having high flattening characteristics with a low voltage applied while ensuring a higher processing rate for an conductive material, and can remove an unnecessary conductive material and expose a barrier film without causing dishing, erosion, or etching at the interface between the barrier film and a metal (conductive material). The electrolytic liquid for use in electrolytic polishing of a surface conductive material of a workpiece comprises an aqueous solution containing at least one organic acid or its salt, at least one strong acid having a sulfonic acid group, a corrosion inhibitor and a water-soluble polymeric compound.

*FIG. 3*

EP 1 894 656 A2

**Description**

BACKGROUND OF THE INVENTION

Field of the Invention:

The present invention relates to an electrolytic liquid for use in electrolytic polishing of a surface conductive material of a workpiece and an electrolytic polishing method using the electrolytic liquid, and more particularly to an electrolytic liquid for use in electrolytic polishing of a surface conductive material of a substrate of an electronic device, such as a semiconductor device or a display, or a metal material of a vacuum apparatus, a high-pressure apparatus, etc. for which high-precision finishing is required, and to an electrolytic polishing method using the electrolytic liquid.

Description of the Related Art:

Instead of aluminum or an aluminum alloy, which has generally been used as a metal interconnect material for semiconductor integrated circuits, copper, which has low electrical resistance and high electromigration resistance, has been put into practical use these days. Copper interconnects are generally formed by a damascene method which comprises filling copper, by plating, into via holes (connection holes) and trenches provided in an insulating film of a substrate, followed by CMP (chemical mechanical polishing) to remove an extra copper and a barrier film for preventing diffusion of copper and flatten the substrate surface. A CMP apparatus for use in such a process includes a polishing table with a polishing pad (polishing cloth) attached thereto, and a polishing head for holding a substrate, such as a semiconductor wafer, as a workpiece, and polishes the surface of the substrate with the polishing pad into a flat, mirror-like surface by rotating the substrate, held by the polishing head, and the polishing table simultaneously while pressing the substrate against the polishing pad of the polishing table at a predetermined pressure and supplying an abrasive (slurry) to the sliding surfaces.

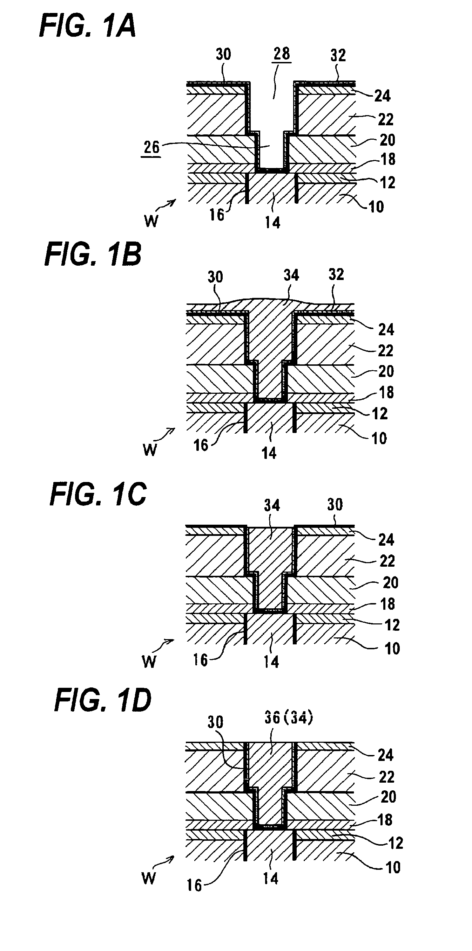

FIGS. 1A through 1D illustrate, in a sequence of process steps, a conventional process for the production of a substrate having copper interconnects. As shown in FIG. 1A, after forming a lower-layer interconnect 14 of copper, surrounded by a barrier film 16, in an insulating film (interlevel dielectric film) 10 and a hard mask 12, formed in a substrate W, a Si-N barrier film 18, a first insulating film 20, a second insulating film 22 and a hard mask 24 are superimposed in this order while a via hole 26 and a trench 28 are formed in these layers, e.g., by the lithography/etching technique. Thereafter, a barrier layer 30 is formed on an entire surface and a copper seed layer 32, which serves as a feeding layer in electroplating, is formed on the barrier layer 30.

A metal material, such as W, Ta/Ta$_X$N$_Y$, Ti$_X$N$_Y$, W$_X$N$_Y$, W$_X$Si$_Y$ (X and Y are each a numerical value that varies depending on the alloy), Ta$_X$Si$_Y$N$_Z$, Ti$_X$Si$_Y$N$_Z$ (X, Y and Z are each a numerical value that varies depending on the alloy), Ru or Ru/WCN, is generally used for the barrier film 30 for preventing copper diffusion.

Next, as shown in FIG. 1B, copper 34 as an interconnect material is filled into the via hole 26 and the trench 28 of the substrate W while depositing copper 34 over the hard mask 24, for example, by plating. Thereafter, the copper 34 at the outermost surface of the substrate W and the seed film 32 are removed by chemical mechanical polishing (CMP) using an abrasive slurry, as shown in FIG. 1C, and then the barrier film 30 on the insulating film 22 is removed, whereby the polishing process is completed. An upper-layer interconnect 36 composed of the copper 34 is thus formed in the insulating films 20, 22, as shown in FIG. 1D.

With the recent movement toward higher integration of semiconductor devices in the field of semiconductor industry, an organic or inorganic material called low-k material, which has a lower dielectric constant than that of a conventional CVD-SiO$_2$ film, is being used more and more for an insulating film (interlevel dielectric film). A decrease in the dielectric constant of a film of low-k material can be attained, e.g., by decreasing the film density. Because of the decrease in film density, however, a film of low-k material is generally poor in the mechanical strength as compared to a conventional SiO$_2$ film. Accordingly, when using a low-k material (low-dielectric constant material) for the above insulating films (interlevel dielectric films) 20, 22 and removing the surface copper 34, the seed film 32 and the barrier film 30 of the substrate W by chemical mechanical polishing (CMP), the insulating film (low-k material) 22 is likely to peel off from, e.g., the hard mask 24 and, in addition, the insulating films (interlevel dielectric films) 20, 22 may be easily broken by the pressure applied during the CMP. If the pressure is lowered in order to prevent the breakage of the insulating films (interlevel dielectric films) 20, 22, the polishing rate will decrease, resulting in a lowered productivity. Thus, it is generally difficult to employ a CMP process for a substrate having an insulating film of low-k material.

A conceivable measure to solve the above problems is to polish a surface copper, a seed film, etc. of a substrate by chemical polishing or electrolytic polishing. These polishing methods, unlike conventional CMP, do not employ a mechanical action but chemically or anodically dissolve a surface conductive material, such as copper, of a substrate, thereby polishing and flattening the substrate surface into a mirror-like surface. The polishing methods do not entail such problems as the production of defects, such as a denatured processed layer, dislocation, etc., due to plastic deformation, thus achieving the intended aim of carrying out polishing without impairing the properties of materials including a low-k material.

On the other hand, chemical polishing and electrolytic polishing, which generally carry out polishing without applying a pressure on a polishing object by bringing a polishing pad or the like into contact with the polishing object as in conventional CMP, can bring about the following problems: When a surface of a metal (copper) film, which has been formed in a substrate, e.g., by plating such that the film fills via holes and trenches, is polished and flattened by such a polishing method to form metal interconnects, raised portions and recessed portions of those surface irregularities of the metal film, which have been formed upon the film formation, will be removed at the same rate if a polishing rate comparable to that of CMP is to be ensured. Accordingly, the metal surface will not be flattened and the metal interconnects will be thinner in their central portions if the polishing is continued. Thus, the so-called "dishing", the phenomenon of over-polishing of a metal interconnect, presenting the shape of a curved dish when the metal interconnect is viewed cross-sectionally, will occur in the metal interconnects.

A possible measure to solve this problem is to employ composite electrolytic polishing (electrochemical mechanical polishing), which is a kind of electrolytic polishing and a technique utilizing a combination of the principles of CMP and electrolytic polishing, in processing and flattening a metal surface. An exemplary composite electrolytic polishing method comprises applying a voltage between a polishing table with a polishing pad (polishing cloth) attached thereto and a surface metal (copper) of a substrate (workpiece), such as a semiconductor wafer, held by a polishing head, with the polishing table as a cathode and the surface metal (copper) as an anode, and rotating the polishing table and the substrate while pressing the substrate against the polishing pad at a predetermined pressure and supplying an electrolytic liquid to the sliding surfaces, thereby polishing the surface metal of the substrate in an electrochemical mechanical manner (see, for example, Japanese Patent Publication Nos. 2004-141990 and 2005-340600, PCT National Publication No. 2005-518670, and U.S. Patent Publication No. 2006/0006074).

The processing principle of electrolytic polishing, including electrochemical mechanical polishing, consists in promoting oxidation and dissolution of a metal surface of a substrate (workpiece) by an electrolytic action, and promoting removal of an oxide film from the substrate by a polishing pad, thereby flattening the metal surface. However, it is generally difficult with electrolytic polishing, including electrochemical mechanical polishing, to meet the high requirements of securing a processing rate for a metal, comparable to CMP, and obtaining a flatter processed surface as compared to CMP. This is partly because though the processing rate of a metal generally increases with an increase in the voltage applied between the metal and a polishing pad, the increase in the processing rate may result in a roughened processed surface or the production of increased defects in the processed surface.

## SUMMARY OF THE INVENTION

As described above, in electrolytic polishing, including composite electrolytic polishing (electrochemical mechanical polishing), though the processing rate of a metal generally increases with an increase in the voltage applied, the increase in the processing rate may result in a roughened processed surface or the production of increased defects in the processed surface. Further, the biggest problem in electrolytic polishing (electrochemical mechanical polishing) is over-dissolution (over-etching) of a metal (conductive material), such as copper, as a polishing object during polishing, which may cause dishing or erosion in the polished surface. Thus, a sufficiently flat polished surface cannot be obtained. Especially in a process of etching away a metal, such as copper, lying between interconnects (field region and space region) until exposure of a barrier film, in addition to dishing, etching at the interface between the barrier film and the metal (conductive material) is likely to occur. This is because a protective film-forming agent, contained in an electrolytic liquid, loses its protective effect for the intended portion to be protected upon application of a high voltage. Thus, if it becomes possible to obtain a high processing rate for a conductive material at the same level as CMP even at such a low electrolytic voltage that a protective film-forming agent can maintain its effect, electrolytic polishing, including composite electrolytic polishing (electrochemical mechanical polishing), will be useful as a processing method that causes less damage than CMP to, e.g., a semiconductor device having a weak material, such as a low-k material.

Control of electrolytic voltage is generally difficult because the resistivity of a barrier film is higher than the resistivity of a conductive material (metal), such as copper, as a polishing object, and the oxidation (dissolution) potential of the barrier film is higher than that of the conductive material. For example, if polishing is continued in bulk polishing constantly at a high voltage set to provide a high polishing rate, it is possible that a protective film-forming agent may lose its protective effect for an intended portion to be protected, and that electric field may concentrate at the interface between a conductive material and a barrier film, whose resistivities differ greatly, whereby abnormal processing is likely to occur.

During an initial polishing period when there is generally a large level difference in surface irregularities of a polishing object, there is a sufficiently large difference between a pressure on a raised portion and a pressure on a recessed portion, applied from a polishing pad. Therefore, polishing progresses while a protective film formed on the raised portion is removed by the polishing pad, whereas the recessed portion is kept protected by the protective film.

The surface irregularities are thus smoothed out gradually. As the level difference in the surface irregularities decreases with the progress of polishing, the pressure difference between raised portions and recessed portions decreases gradually. Thus, the protection of the protective film formed in those portions for which over-polishing is to be avoided will be insufficient unless the protective film is resistant to polishing by the polishing pad. A strong protection is required for the protective film when a barrier film becomes exposed.

Electrolytic polishing herein refers to a polishing method which involves passing an electric current between a conductive material and an opposing electrode with an electrolytic liquid to process the conductive material by an electrochemical action, and herein includes the below-described electrochemical mechanical polishing. Chemical mechanical polishing (CMP) is a wet mechanochemical processing method which utilizes a solid-liquid reaction between a workpiece and a polishing liquid and which has been developed to attain planarization (flattening of interlevel dielectric films in a multilevel interconnect structure) in VLSI devices. Electrochemical mechanical polishing herein refers to a polishing method which involves applying a tool to a workpiece while passing an electric current between a conductive material and an opposing electrode with an electrolytic liquid to process the conductive material by an electrochemical action and a mechanical action.

As described above, electrolytic polishing, in its application to a semiconductor manufacturing process, involves the problem that when a barrier film is exposed by electrolytic polishing, over-polishing (dishing) will occur, whereby even that portion of a conductive material, such as an interconnect metal, which should be left, can undesirably be polished away. There is, therefore, a need for a polishing method which can avoid such over-polishing for a conductive material, such as an interconnect metal, and will not cause etching at the interface between a barrier film and a metal (conductive material) nor dishing when the barrier film between interconnect portions (field region and space region) becomes exposed by polishing.

The present invention has been made in view of the above situation in the related art. It is therefore an object of the present invention to provide an electrolytic liquid for electrolytic polishing and an electrolytic polishing method which, particularly in polishing of a surface conductive material, such as copper, of a substrate in a semiconductor manufacturing process, can provide a processed surface having high flattening characteristics with a low voltage applied while ensuring a higher processing rate for the conductive material, and can remove an unnecessary conductive material and expose a barrier film without causing dishing, erosion, or etching at the interface between the barrier film and a metal (conductive material).

In order to achieve the object, the present invention provides an electrolytic liquid for use in electrolytic polishing of a surface conductive material of a workpiece, comprising an aqueous solution containing at least one organic acid or its salt, at least one strong acid having a sulfonic acid group, a corrosion inhibitor and a water-soluble polymeric compound.

By carrying out electrolytic polishing using the electrolytic liquid containing at least one organic acid or its salt and at least one strong acid having a sulfonic acid group, a high processing rate for a conductive material can be obtained with a lower voltage applied. Thus, the processing rate of the conductive material can be increased without increasing the voltage applied. This can prevent roughening of a processed surface with an increase in the processing rate. Further, the use of the electrolytic liquid containing a corrosion inhibitor and a water-soluble polymeric compound can prevent the formation of surface defects, such as pits, and provide a processed surface having good flatness.

The organic acid preferably has a carboxyl group.

An organic acid having a carboxyl group easily forms a soluble complex with a metal ion dissolved by an electrolytic reaction, thus facilitating diffusion of the metal ion. Accordingly, the use of an organic acid having a carboxyl group can increase the processing rate of a conductive material.

Preferably, the organic acid also has a hydroxyl group.

An organic acid having a carboxyl group and a hydroxyl group more easily forms a soluble complex with a metal ion dissolved by an electrolytic reaction. Accordingly, the use of an organic acid having a carboxyl group and a hydroxyl group can increase the processing rate of a conductive material.

The organic acid is preferably selected from the group consisting of acetic acid, propionic acid, oxalic acid, malonic acid, succinic acid, glutaric acid, adipic acid, maleic acid, fumaric acid, citric acid, aconitic acid, glyoxylic acid, glycolic acid, lactic acid, gluconic acid, malic acid, tartaric acid, and a mixture thereof.

The concentration of the organic acid is preferably 0.1 to 80% by weight.

The strong acid having a sulfonic acid group is preferably selected from the group consisting of methanesulfonic acid, benzenesulfonic acid, taurine, cysteic acid, an alkylbenzene sulfonic acid having 1 to 6 carbons in the alkyl group, trifluoromethanesulfonic acid, fluorosulfonic acid, and a mixture thereof.

The concentration of the strong acid having a sulfonic acid group is preferably 0.1 to 20% by weight.

The corrosion inhibitor preferably is benzotriazole or a derivative thereof.

A corrosion inhibitor composed of benzotriazole or a derivative thereof can form a highly effective protective film on a processing surface of a workpiece upon electrolytic polishing. The use of such a corrosion inhibitor can effectively eliminate a level difference in the processing surface. Examples of the derivative include tolyltriazole, 1-hydroxybenzotriazole, 4-hydroxybenzotriazole, 5-chloro-benzotriazole, benzotriazole-5-carboxylic acid, and 5-nitrobenzotriazole.

The concentration of the corrosion inhibitor is preferably 0.001 to 5% by weight.

The water-soluble polymeric compound is preferably selected from the group consisting of polyacrylic acid or a salt thereof, polymethacrylic acid or a salt thereof, polyethylene glycol, polyisopropyl acrylamide, polydimethyl acrylamide, polymethacrylamide, polymethoxyethylene, polyvinyl alcohol, hydroxyethyl cellulose, carboxymethyl cellulose, polyvinylpyrrolidone, and a mixture thereof.

The concentration of the water-soluble polymeric compound is preferably 0.005 to 5% by weight.

Preferably, the electrolytic liquid further comprises abrasive particles.

The use of the electrolytic liquid containing abrasive particles in electrolytic polishing can increase the processing rate and can suppress the formation of defects in a processed surface and roughening of the surface. Example of usable abrasive particles may include alumina, colloidal silica, fumed silica, zirconium oxide (zirconia), cerium oxide, titanium oxide, and manganese oxide.

The concentration of the abrasive particles is preferably 0.01 to 10% by weight.

Preferably, the electrolytic liquid further contains a surfactant.

The use of the electrolytic liquid containing a surfactant in electrolytic polishing can enhance dispersion of the abrasive particles, thereby further suppressing roughening of a polished surface.

Preferably, the electrolytic liquid has an electric conductivity of 5 to 200 mS/cm.

Electrolytic liquids having different electric conductivities, when used in electrolytic polishing, provide different processing rates with the same voltage applied. Thus, the electric conductivity of the electrolytic liquid can be adjusted so as to provide a desired processing rate at a given voltage.

Preferably, the electrolytic liquid has a pH of 2 to 10.

An optimal electrolytic liquid for any of processing rate, elimination of surface level difference and prevention of surface roughening can be prepared by adjusting the pH of the electrolytic liquid.

Preferably, the electrolytic liquid further contains a conductive material, which is the same as the surface conductive material of the workpiece, in an amount of 0.001 to 10% by weight as a starting component.

When a conductive material, which is the same as the surface conductive material of the workpiece, is dissolved in the electrolytic liquid in advance, the resistance at the interface between the electrolytic liquid and the conductive material is reduced, whereby diffusion of polishing products, including the conductive material, into the electrolytic liquid is promoted during polishing. The polishing rate can therefore be increased and, in addition, surface roughening of the polished surface can be suppressed.

The present invention also provides an electrolytic liquid for use in electrolytic polishing of a surface conductive material of a workpiece, comprising (a) 2 to 80% by weight of an organic acid, (b) 2 to 20% by weight of a strong acid having a sulfonic acid group, (c) 0.01 to 1% by weight of a corrosion inhibitor, (d) 0.01 to 1% by weight of a water-soluble polymeric compound, (e) 0.01 to 2% by weight of abrasive particles and (f) 0.01 to 1% by weight of a surfactant, based on the weight of the electrolytic liquid, and having a pH of 2 to 10.

The present invention also provides an electrolytic polishing method for polishing a surface conductive material of a workpiece, comprising applying a voltage between the conductive material and an opposing electrode while rubbing the surface of the conductive material with a polishing pad in the presence of any one of the above-described electrolytic liquids.

The present invention also provides an electrolytic polishing method for polishing and removing a surface conductive material formed on a barrier film of a workpiece, the workpiece having interconnect portions consisting of interconnect recesses filled with the conductive material, in such a manner that only the conductive material lying outside the interconnect portions is removed, comprising applying a voltage between the conductive material and an opposing electrode disposed opposite the conductive material while rubbing the surface of the conductive material with a polishing pad in the presence of an electrolytic liquid, wherein the electrolytic liquid comprises an aqueous solution containing (a) at least one organic acid or its salt, (b) at least one strong acid having a sulfonic acid group, (c) a corrosion inhibitor and (d) a water-soluble polymeric compound, and the polishing is carried out by a process comprising the steps of: a first step of polishing the conductive material (i) lying over the interconnect portions at a lower polishing rate than that of the other conductive material (ii) lying outside the interconnect portions so that the conductive material (i) becomes raised with respect to the conductive material (ii); and a second step of polishing the conductive material (ii) until the barrier film becomes exposed while polishing the raised conductive material (i).

Thus, in the first polishing step, a conductive material (i) lying above interconnect portions consisting of interconnect recesses filled with the same conductive material is polished at a lower polishing rate than that of the other conductive material (ii) lying outside the interconnect portions (i.e., lying in non-interconnect regions between the interconnect portions, including a field region and a space region) so that the conductive material (i) becomes raised with respect to the conductive material (ii). Thereafter, in the second polishing step, the conductive materials (i) and (ii) lying outside the interconnect portions are polished until a barrier film becomes exposed. The two-step polishing makes it possible to completely remove the conductive material lying outside the interconnect portions without leaving the conductive material (ii) between the interconnect portions while minimizing dishing due to over-polishing of the conductive material (interconnect metal) (i) upon removal of the conductive material (ii) until exposure of the barrier film and also minimizing etching at the interface between the barrier film and the metal (conductive material).

The pH of the electrolytic liquid is preferably adjusted to 3-4.5.

This makes it possible, in carrying out electrolytic polishing of a conductive material having initial surface irregularities, to form a protective film, having a sufficient resistance to a pressure applied by a polishing pad, on the surfaces of recessed portions where the influence of the pressure of the pad is relatively small. The strength of the protective film formed on the surfaces of recessed portions will be insufficient if electrolytic polishing is carried out by using an electrolytic liquid having a pH of more than 4.5. This may make it difficult to change the surface configuration of the conductive material, lying over interconnect portions, e.g., from initial recesses to raised shapes during polishing. On the other hand, the use of an electrolytic liquid having a pH of less than 3 in electrolytic polishing may cause over-polishing whereby initial surface recesses of the conductive material will not change into raised shapes, resulting in poor elimination of the surface level difference. In addition, roughening of the polished surface will be worse.

Preferably, the electrolytic liquid further comprises abrasive particles and a surfactant.

The use of the electrolytic liquid containing abrasive particles in electrolytic polishing can suppress roughening of a polished surface and the formation of defects in the polished surface. The addition of a surfactant to the electrolytic liquid can enhance dispersion of the abrasive particles, thereby further suppressing roughening of a polished surface.

The corrosion inhibitor may preferably be benzotriazole or a derivative thereof. An exemplary benzotriazole derivative is 5-methyl-1H-benzotriazole.

3-amino-5-methyl-4H-1,2,4-triazole, bismuthiol or a derivative thereof, salicylaldehyde or a derivative thereof may also be preferably used as the corrosion inhibitor.

Preferably, a film thickness of the remaining conductive material is detected by a change in eddy current.

A change in a film thickness of a conductive material as a polishing object or the state of exposure of a barrier film can be monitored by detecting a change in eddy current. By feedback of the detection results to control, e.g., a voltage applied between the conductive material and an opposing electrode, the conductive material (interconnect metal) embedded in trenches, etc. can be prevented from being polished excessively after the barrier film begins to be exposed.

The electrolytic liquid of the present invention, when used in electrolytic polishing (processing) of a surface conductive material, such as copper, of a substrate, can process the conductive material with good flattening characteristics at a lower pressure and a higher processing rate while preventing excessive etching.

According to the electrolytic polishing method of the present invention, when polishing and removing an extra interconnect metal (conductive material), such as copper, on a barrier film to form interconnects, the extra metal can be completely removed, without leaving the conductive material between interconnect portions, while minimizing dishing due to over-polishing of the interconnect metal and also minimizing etching at the interface between the barrier film and the metal (conductive material).

BRIEF DESCRIPTION OF THE DRAWINGS

FIGS. 1A through 1D are diagrams illustrating, in a sequence of process steps, a conventional process for forming a substrate having interconnects;

FIG. 2 is a plan view of an electrolytic polishing apparatus;

FIG. 3 is a vertical sectional front view of the apparatus of FIG. 2;

FIG. 4 is a graph showing the relationship between the concentration of copper in an electrolytic liquid and a surface roughness of a copper surface, observed in polishing of the copper surface carried out using the electrolytic liquid with various copper concentrations;

FIG. 5 is a graph showing the relationship between the concentration of copper in an electrolytic liquid and the polishing rate of a copper surface, observed in polishing of the copper surface carried out using the electrolytic liquid with various copper concentrations;

FIG. 6 is a vertical sectional view of another electrolytic polishing apparatus;

FIGS. 7A through 7C are diagrams illustrating the principle of polishing according to the present invention, as carried out using the electrolytic polishing apparatus shown in FIG. 6;

FIGS. 8A through 8C are diagrams showing voltage waveforms usable in the present invention;

FIGS. 9A through 9C are diagrams showing cross-sectional profiles of patterned wafers, as observed in polishing of the respective wafers carried out in the manner under the "Effect of pH of electrolytic liquid (before exposure of barrier film between interconnect portions)";

FIG. 10 is a diagram showing a cross-sectional profile of a patterned wafer, as observed in polishing of the wafer carried out in the manner under the "Effect of pH of electrolytic liquid (upon exposure of barrier film between interconnect portions)";

FIGS. 11A and 11B are diagrams showing cross-sectional profiles of patterned wafers, as observed in polishing of the respective wafers carried out in the manner under the "Effect of applied voltage (before exposure of barrier film between interconnect portions)"; and

FIGS. 12A and 12B are diagrams showing cross-sectional profiles of patterned wafers, as observed in polishing of the respective wafers carried out in the manner under the "Effect of applied voltage (after exposure of barrier film between interconnect portions)".

DETAILED DESCRIPTION OF THE PREFERRED EMBODIMENTS

Preferred embodiments of the present invention will now be described with reference to the drawings. The following description illustrates the case of removing an unnecessary portion of a copper film (including a seed film) as an interconnect material, formed on a barrier film of a substrate as a polishing object, thereby exposing the barrier film.

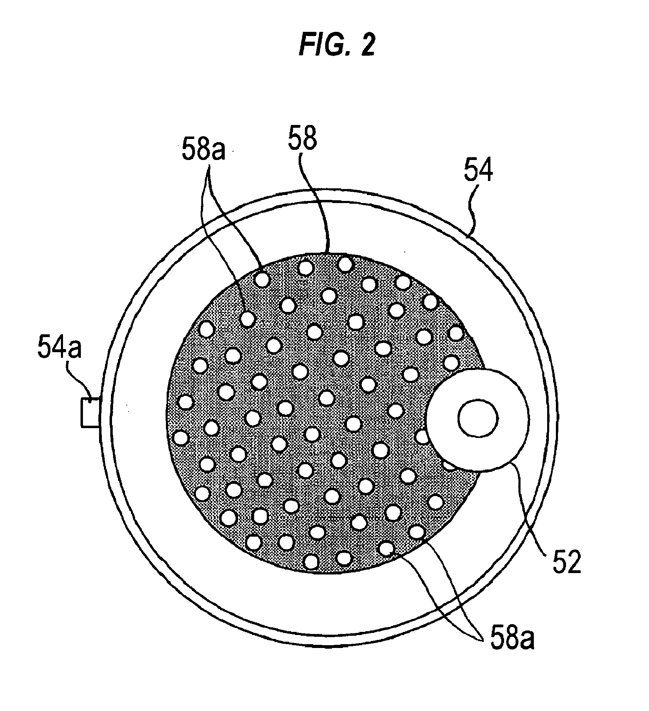

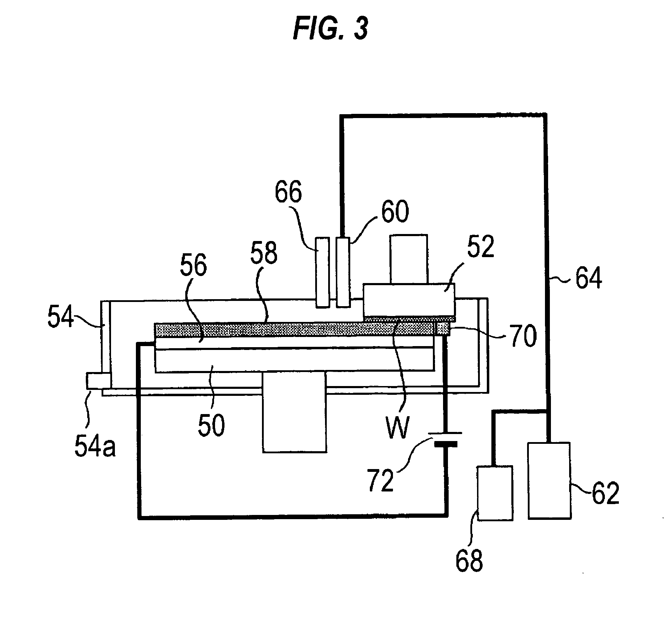

FIG. 2 is a plan view showing an electrolytic polishing apparatus, and FIG. 3 is a vertical sectional front view of the apparatus. This electrolytic polishing apparatus can be used to polish, for example, a substrate (polishing object) W, as shown in FIG. 1B, which has been prepared by carrying out copper plating on a surface of the substrate shown in FIG. 1A, thereby filling copper 34 as an interconnect metal into via holes 26 and trenches 28 as interconnect recesses and depositing copper 34 on a hard mask 24. Polishing of the substrate surface is carried out to remove the copper (conductive material) 34 (and seed film 32) on the hard mask 24, thereby exposing a barrier film 30, as shown in FIG. 1C. Further, by removing the barrier film 30 on the hard mask 24, upper-layer interconnects 36 composed of the copper 34 are formed in insulating films 20, 22.

As shown in FIGS. 2 and 3, the electrolytic polishing apparatus includes a rotatable polishing table (turntable) 50, a vertically-movable and rotatable substrate holder (polishing head) 52 for detachably holding the substrate W with its front surface (surface of copper 34) facing downwardly, and a bottomed cylindrical processing chamber 54 that surrounds the polishing table 50 and the substrate holder 52 to prevent scattering of liquid, such as an electrolytic liquid or pure water, which is supplied to the upper surface of the polishing table 50 during or after polishing. The processing chamber 54 has in its sidewall a discharge outlet 54a for discharging the liquid received in the chamber 54. The substrate holder (polishing head) 52 is designed to be movable between a predetermined polishing position above the polishing table 50 and a substrate delivering/receiving position lateral to the polishing position.

A disk-shaped processing electrode 56, having such a size that it covers almost the entire area of the polishing table 50, is provided on the upper surface of the polishing table 50. The upper surface of the processing electrode 56 is entirely covered with a polishing pad (polishing cloth) 58 whose upper surface constitutes a polishing surface. The polishing pad 58 has a large number of vertical through-holes 58a so that the liquid, such as an electrolytic liquid, supplied to the upper surface of the polishing table 50 is held within the polishing pad 58. During polishing, the processing electrode 56 is electrically connected to a surface conductive material, such as copper 34, of the substrate W via the electrolytic liquid held in the through-holes 58a of the polishing pad 58. A polishing pad for CMP can be used as the polishing pad 58. In this embodiment, the polishing pad 58 is composed of IC-1000, manufactured by Nitta Haas Inc., having a large number of through-holes 58a all over the body.

The polishing pad 58 may have an annular groove or grooves, or grooves in a lattice arrangement, provided the pad has through-holes all over the body. If the polishing pad 58 itself is permeable to liquid, it may not necessarily have through-holes.

Above the polishing table 50 is disposed an electrolytic liquid supply nozzle 60 for supplying the electrolytic liquid to the upper surface of the polishing table 50 during polishing. The electrolytic liquid supply nozzle 60 is connected to an electrolytic liquid supply line 64 which extends from an electrolytic liquid storage tank 62 for temporary storage of the electrolytic liquid, and which is provided with a not-shown electrolytic liquid supply means, such as a tube pump, a diaphragm pump or a bellows pump. Above the polishing table 50 is also disposed a pure water supply nozzle 66 for supplying rinsing or cleaning pure water to the upper surface of the polishing table 50 after polishing.

In this embodiment, an additive component(s) of the electrolytic liquid, which easily precipitates or decomposes, is stored in a separate storage container 68 from the electrolytic liquid storage tank 62, and is added to the electrolytic liquid stored in the electrolytic storage tank 62 to adjust the liquid into a predetermined condition before supplying the liquid from the electrolytic liquid supply nozzle 60 to the upper surface of the polishing table 50. In some cases, however, it is possible not to provide the storage tank 68 and to directly supply the electrolytic liquid, which has been prepared and stored in the electrolytic liquid storage tank 62, from the electrolytic liquid supply nozzle 60 to the upper surface of the polishing table 50.

Located beside the polishing table 50 in the processing chmber 54, a columnar feeding electrode 70 is disposed such that its upper surface is approximately flush with the surface of the polishing pad 58. When the substrate holder 52 is lowered and the substrate W held by the substrate holder 52 is pressed against the polishing pad 58 at a predetermined pressure, the upper surface of the feeding electrode 70 comes into contact with the surface (lower surface) of the conductive material, such as copper 34, at a peripheral portion of the substrate W, so that electricity is fed to the conductive material as a polishing object. The feeding electrode 70 is connected to the anode of a power source 72 which is capable of controlling a voltage to be applied and its waveform, while the processing electrode 56 is connected to the cathode of the power source 72.

A description will now be made of electrolytic polishing by the electrolytic polishing apparatus shown in FIGS. 2 and 3. First, the substrate holder 52 holding the substrate W with its front surface facing downwardly is positioned at a predetermined position above the polishing table 50. Next, while rotating the polishing table 50, an electrolytic liquid is supplied from the electrolytic liquid supply nozzle 60 to the upper surface of the polishing table 50 and, at the same time, while rotating the substrate holder 52 together with the substrate W, the substrate holder 52 is lowered to press the substrate W against the polishing pad 58 at a predetermined pressure. When the feeding electrode 70 comes into contact with the surface copper 34 of the substrate W, the feeding electrode 70 is connected to the anode of the power source 72 and the processing electrode 56 is connected to the cathode of the power source 72 to apply a predetermined voltage between the processing electrode 56 and the surface copper 34 of the substrate W, thereby causing an electrolytic reaction at the surface of the copper 34, serving as an anode, to polish the copper 34. During the polishing, the processing electrode 56 and the surface copper 34 of the substrate W are electrically connected via the electrolytic liquid held in the through-holes 58a of the polishing pad 58.

During the polishing, the surface of the copper 34 of the substrate W, serving as an anode, is anodically oxidized while a protective film is formed on the surface of the copper 34 by a corrosion inhibitor and a water-soluble polymeric compound in the electrolytic liquid. While the copper 34 of the substrate W, which is being pressed on the polishing pad 58, moves relative to the polishing pad 58 by the rotational movement of the substrate W and the rotational movement of the polishing table 50, and is thus mechanically polished, the protective film formed on recessed portions present in the surface of the copper 34 of the substrate W is not removed, and electrolytic polishing proceeds only on the protective film formed on raised portions present in the surface of the copper 34. By thus selectively removing only the protective film on the raised portions of the surface irregularities of the copper 34 of the substrate W, the copper 34 can be polished while flattening its surface.

After completion of the electrolytic polishing, the processing electrode 56 and the feeding electrode 70 are disconnected from the power source 72, and the supply of the electrolytic liquid is stopped. Thereafter, the substrate holder 52 is raised, and the substrate W is then transported by the substrate holder 52 for the next process.

A description will now be made of an electrolytic liquid for use in the electrolytic polishing apparatus shown in FIGS. 2 and 3.

The electrolytic liquid contains (1) at least one organic acid or its salt, (2) at lest one strong acid having a sulfonic acid group, (3) a corrosion inhibitor (nitrogen-containing heterocyclic compound), (4) a water-soluble polymeric compound, (5) a pH adjustor, (6) abrasive particles and (7) a surfactant. The electrolytic liquid may also contain, as a starting component, (8) the same conductive material as the polishing object, e.g., copper.

Though copper is polished in this embodiment, other conductive materials may, of course, be polished. Examples of such conductive materials include a copper alloy, silver or its alloy, gold or its alloy, aluminum or its alloy, tungsten or its alloy, nitride, carbide or nitrogen carbide, titanium or its alloy, nitride, carbide or nitrogen carbide, tantalum or its alloy, nitride, carbide or nitrogen carbide, ruthenium or its alloy, or a combination thereof.

The respective components of the electrolytic liquid will now be described.

The organic acid contained in the electrolytic liquid needs to form a soluble complex with a metal (conductive material), such as copper, as a polishing object. In particular, the organic compound needs to make a coordinate bond with a metal, such as copper, to form a complex which is soluble in the aqueous solution. At least the organic acid itself must be water-soluble. The organic acid preferably has at least one carboxyl group (-COOH) in the molecule, or also has at least one hydroxyl group (-OH) together with a carboxyl group(s) in the molecule. Such an organic acid also has a pH buffering ability to stabilize the pH of the liquid.

Examples of carboxylic acids having one carboxyl group, which are preferable organic acids for use in the electrolytic liquid, may include formic acid, acetic acid, propionic acid, n-butyric acid, isobutyric acid, n-valeric acid, isovaleric acid, sorbic acid, glyoxylic acid, pyruvic acid, levulinic acid, benzoic acid, m-toluic acid, and acetylsalicylic acid. Examples of carboxylic acids having two or more carboxyl groups, which are also preferable organic acids for use in the electrolytic liquid, may include oxalic acid, malonic acid, succinic acid, glutaric acid, adipic acid, pimelic acid, suberic acid, maleic acid, fumaric acid, citraconic acid, mesaconic acid, itaconic acid, α-ketoglutaric acid, aconitic acid, phthalic acid, and piromellitic acid.

Examples of carboxylic acids having at least one carboxyl group and at least one hydroxyl group, which are also preferable organic acids for use in the electrolytic liquid, may include citric acid, glycolic acid, lactic acid, gluconic acid, malic acid, tartaric acid, oxalacetic acid, salicylic acid, m-hydroxybenzoic acid, gentisic acid, protocatechuic acid, gallic acid, glucuronic acid, sialic acid, and ascorbic acid.

Examples of carboxylic acid salts include a potassium salt, an ammonium salt, an alkylamine salt, and a hydroxylamine salt. These acids or salts may be used singly or as a mixture of two or more in the electrolytic liquid.

Of the above-mentioned organic acids, malonic acid, succinic acid, citric acid, glycolic acid, lactic acid, gluconic acid, malic acid and tartaric acid are particularly preferred. It has been confirmed experimentally that the use, in polishing, of an electrolytic liquid containing any one of these acids can obtain a flat processed surface at a relatively high processing rate.

The concentration of the organic acid in the electrolytic liquid should be not more than the saturation solubility at the liquid temperature upon polishing. If the concentration exceeds the saturation solubility, the organic acid will precipitate in the electrolytic liquid whereby stable processing cannot be performed. For example, the solubility of maleic acid is 78% by weight (25°C). If the organic acid concentration is lower than 0.1%, on the other hand, the amount of the organic acid, which is to make a coordinate bond with a metal to be dissolved, supplied to a processing surface will be deficient, causing such problems as retarded processing, roughening of the processing surface, etc. In addition, the organic acid in such a low concentration will not have a sufficient pH buffering effect. For the above reasons, the concentration of the organic acid is preferably 0.1 to 80% by weight, more preferably 1 to 50% by weight.

The strong acid having a sulfonic group, contained in the electrolytic liquid, is to promote an etching action and to increase the electric conductivity of the electrolytic liquid, thus facilitating passage of electric current. The strong acid herein refers to an acid having a pKa value of not more than 3. The pKa is the logarithm of the inverse of the first dissociation constant indicative of the intensity of an acid.

In general, the use of a strong acid decreases the electric potential at which dissolution of copper begins. That is, copper can be processed at a lower applied voltage. It has been confirmed, however, that the use of sulfuric acid, nitric acid or perchloric acid considerably roughen a processing surface due to etching of, e.g., copper. Phosphoric acid is highly viscous in the concentration range in which surface gloss can be obtained, and therefore requires a relatively high voltage for processing of copper. On the other hand, the use of, e.g., methanesulfonic acid can use a low voltage for processing of copper and can obtain a relatively flat processed surface with good processing characteristics.

Examples of preferable strong acids having a sulfonic acid group include methanesulfonic acid, benzenesulfonic acid, taurine, cysteic acid, an alkylbenzene sulfonic acid having 1 to 6 carbons in the alkyl group, trifluoromethanesulfonic acid, and fluorosulfonic acid. These acids may be used singly or as a mixture of two or more. The concentration of the strong acid having a sulfonic acid group is preferably 0.1 to 20% by weight, more preferably 5 to 20% by weight. If the concentration of the strong acid is too low, the electric conductivity of the electrolytic liquid is so low that it becomes hard to pass electric current therethrough. The concentration of the strong acid having a sulfonic acid of not less than 5% by weight is therefore preferred. If the concentration of the strong acid having a sulfonic acid exceeds 20% by weight, on the other hand, the saturation solubilities of the organic acid and other components in the electrolytic liquid will decrease, which can cause precipitation of the components.

The corrosion inhibitor contained in the electrolytic liquid preferably is a nitrogen-containing heterocyclic compound, and may be one which is known to form a compound with a metal, such as copper, to be processed, and form a protective film on the metal surface, thereby preventing corrosion of the metal. Such a corrosion inhibitor can prevent excessive processing and thus dishing, thereby promoting flattening of a processed surface.

Benzotriazole, which is well known as a corrosion inhibitor for copper, or its derivatives can be preferably used as a corrosion inhibitor in the present invention. Examples of other usable corrosion inhibitors, having the effect of promoting flattening, may include indole, 2-ethylimidazole, benzimidazole, 2-mercaptobenzimidazole, 3-amino-1,2,4-triazole, 3-amino-5-methyl-4H-1,2,4-triazole, 5-amino-1H-tetrazole, 2-mercaptobenzothiazole, sodium 2-mercaptobenzothiazole, 2-methylbenzothiazole, (2-benzothiazolylthio) acetic acid, 3-(2-benzothiazolylthio) propionic acid, 2-mercapto-2-thiazolin, 2-mercaptobenzoxazole, 2-5-dimercapto-1,3,4-thiadiazole, 5-methyl-1,3,4-thiadiazole-2-thiol, 5-amino-1,3,4-thiadiazole-2-thiol, pyridine, phenazine, acridine, 1-hydroxypyridine-2-thione, 2-aminopyridine, 2-aminopyrimidine, trithiocyanuric acid, 2-dibutylamino-4,6-dimercapto-s-triazine, 2-anilino-4,6-dimercapto-s-triazine, 6-aminopurine, and 6-thioguanine. These compounds may be used either singly or as a mixture of two or more.

If the concentration of the corrosion inhibitor in the electrolytic liquid is too low, the formation of a protective film is insufficient, whereby excessive etching of a metal, such as copper, will occur and a flat processed surface will not be obtained. On the other hand, if the concentration of the corrosion inhibitor is too high, though not exceeding the saturation solubility, a protective film will be formed excessively on the surface of a metal, such as copper, leading to a lowering of the processing rate. Furthermore, uniform processing will not be performed, causing roughening of a processed surface and the formation of pits in the processed surface. Thus, the concentration of the corrosion inhibitor is preferably 0.001 to 5% by weight, more preferably 0.02 to 2% by weight.

The water-soluble polymeric compound contained in the electrolytic liquid, together with the corrosion inhibitor, forms a protective film, which effectively prevents excessive etching and flattens a metal surface, such as copper. Further, the viscosity of the electrolytic liquid containing a water-soluble polymeric compound is high in the vicinity of a metal surface (processing surface), such as copper. A viscous film is formed on recessed portions of fine irregularities present in the metal surface, and the fine irregularities are polished and removed, providing a glossy surface.

Examples of preferable water-soluble polymeric compounds, having the above effect, include polyacrylic acid or a salt thereof, polymethacrylic acid or a salt thereof, polyethylene glycol, polyisopropyl acrylamide, polydimethyl acrylamide, polymethacrylamide, polymethoxyethylene, polyvinyl alcohol, hydroxyethyl cellulose, carboxymethyl cellulose, and polyvinylpyrrolidone. These compounds may be used either singly or as a mixture of two or more.

A water-soluble polymeric compound having a weight-average molecular weight of 1, 000 to 500, 000 can be used. A polymeric compound having a weight-average molecular weight of more than 500, 000 will not dissolve in the electrolytic liquid, causing coagulation with a corrosion inhibitor or abrasive particles. On the other hand, a polymeric compound having a weight-average molecular weight of less than 1,000 cannot form a sufficient protective film on a metal surface, such as copper, lowering the flattening performance of the electrolytic liquid. The weight-average molecular weight of the water-soluble polymeric compound contained in the electrolytic liquid is preferably 1, 000 to 100, 000, more preferably 2, 000 to 25, 000.

In order not to lower the processing rate in electrolytic polishing and to prevent excessive processing action, the concentration of the water-soluble polymeric compound is preferably 0.005 to 5% by weight, more preferably 0.01 to 2% by weight.

A pH adjustor may be added to the electrolytic liquid to adjust the pH of the electrolytic liquid. An alkali, such as ammonia, alkylamine, hydroxylamine, polyamine, an alkali metal compound (e.g., potassium hydroxide) or an alkaline earth metal compound, or a mixture thereof, is preferably used as a pH adjustor. The alkali concentration is generally 0.1 to 20% by weight, and may be appropriately determined depending on the intended use and the material of the workpiece, the concentration of the organic acid or its salt, the concentration of the strong acid, the intended pH, etc.

The pH of the electrolytic liquid is preferably 2 to 10. When the pH of the electrolytic liquid is low, corrosion resistance must be considered in selecting the material of an electrolytic polishing apparatus. Further, while the processing rate may increase, roughening of a processing surface and excessive etching of a metal, such as copper, will worsen. A flat processed surface can therefore be hardly obtained. When the pH of the electrolytic liquid is high, on the other hand, the formation of a protective film between copper and the corrosion inhibitor and/or the water-soluble polymeric compound can be insufficient, whereby the flattening effect may lower. The electrolytic liquid most preferably has a pH of 3 to 6 when it is used in such a polishing process as for the formation of copper interconnects in a semiconductor substrate, for which a high processing rate and a flat glossy processed surface without surface roughening are required.

The electrolytic liquid preferably contains abrasive particles. The abrasive particles, besides the effect of mechanically polishing away a metal, such as copper, also have the effect of mechanically polishing away a metal-protecting film formed by the corrosion inhibitor and the water-soluble polymeric compound, according to the present invention. An extra protective film can be removed by the action of the abrasive particles during electrolytic polishing, whereby a sufficiently high processing rate can be obtained.

Examples of preferable abrasive particles for use in the electrolytic liquid include those of alumina, colloidal silica, fumed silica, zirconium oxide, cerium oxide, titanium oxide, and manganese oxide. These materials may be used either singly or as a mixture of two or more. Of these, alumina, colloidal silica and fumed silica are preferably used.

The concentration of abrasive particles in the electrolytic liquid is preferably not more than 10% by weight for the electrolytic liquid to effectively function as an electrolytic polishing liquid, while the concentration of abrasive particles needs to be not less than 0.01% by weight for the abrasive particles to produce an appreciable effect. When a fixed abrasive, such as a polishing pad, is used, a protective film can be effectively removed by bringing the fixed abrasive into contact with a metal surface, such as copper. In this case, it is not necessary to use abrasive particles, though it is, of course, possible to use both a fixed abrasive and abrasive particles. The use of abrasive particles in a concentration of more than 10% by weight can cause a considerable agglomeration of the particles, leading to an extremely high viscosity of the electrolytic liquid. In such a case, deposited abrasive particles will impede electrolytic polishing and cause scratches in a polished surface. The optimal abrasive particle concentration, therefore, is 0.05 to 2% by weight.

The electrolytic liquid may also contain a surfactant. A surfactant, which can effectively improve the dispersion of abrasive particles, will suffice. Any of cationic, anionic, amphoteric and non-ionic surfactants can be used. Examples of anionic surfactants include alkyl ether carboxylate, alkyl sulfate, alkyl sulfonate, amide sulfonate, alkylallyl sulfonate, naphthalenesulfonate, and their formalin condensates. Cationic surfactants may be exemplified by aliphatic amine salts and aliphatic ammonium salts. An appropriate surfactant may be selected depending on the concentration of abrasive particles, the pH of the electrolytic liquid, etc. Anionic surfactants, in particular alkyl sulfonate and a formalin condensate of naphthalenesulfonate, are preferred.

The electric conductivity of the electrolytic liquid is preferably 5 to 200 mS/cm. When the electric conductivity of the electrolytic liquid is low, a higher voltage needs to be applied to carry out electrolytic polishing at an intended processing rate. The application of higher voltage will adversely affect electrolytic polishing, such as lowering of current efficiency in polishing due to the generation of oxygen, the formation of pits in a processed surface, lower flattening effect due to breakage of a protective film, etc. Thus, electrolytic polishing is desirably carried out at a low voltage. To this end, the electric conductivity of the electrolytic liquid is preferably 5 to 200 mS/cm.

In order to increase the polishing rate in electrolytic polishing and to prevent surface roughening of a polished surface, the electrolytic liquid preferably contains the same conductive material as a polishing object, e.g., copper, as a starting component. The concentration of such a starting conductive material, e.g., copper, in the electrolytic liquid is generally not less than 0.001% by weight, preferably not less than 0.005% by weight, more preferably not less than 0.01% by weight. The inclusion of a conductive material as a starting component in the electrolytic liquid can promote diffusion of the same conductive material, e.g., copper, or polishing products including the conductive material from a surface of a polishing object into the electrolytic liquid during polishing. The concentration of a starting conductive material, e.g., copper, in the electrolytic liquid is generally not more than 10% by weight, preferably not more than 1% by weight. This is because when the concentration of a starting conductive material is more than 1% by weight, the conductive material is likely to consume other component(s) of the electrolytic liquid. When the conductive material of a polishing object is a compound, the respective components of the conductive material may be contained in the electrolytic liquid as starting components in a proportion corresponding to the compositional ratio of the compound.

An example of the electrolytic liquid comprises (1) 2 to 80% by weight of an organic acid, (2) 2 to 20% by weight of a strong acid having a sulfonic acid group, (3) 0.01 to 1% by weight of a corrosion inhibitor, (4) 0.01 to 1% by weight of a water-soluble polymeric compound, (5) 0.01 to 2% by weight of abrasive particles, (6) 0.01 to 1% by weight of a surfactant, and an aqueous solvent. The aqueous solvent may be deionized water, preferably ultrapure water.

Electrolytic polishing using the electrolytic liquid of the present invention preferentially processes raised portions of irregularities present in a surface of a conductive material, such as copper, formed over a surface of a workpiece, such as a substrate, while protecting recessed portions of the irregularities with a corrosion inhibitor, thereby processing and flattening the surface of the conductive material. The electrolytic liquid is especially effective for use in electrochemical mechanical polishing which comprises elctrolytically polishing a surface of a conductive material while rubbing the surface with a polishing pad. In particular, a protective film is first formed by a corrosion inhibitor on a surface a conductive material to prevent excessive etching, followed by rubbing of the surface of the conductive material with a polishing pad having appropriate hardness and flatness, thereby selectively removing the protective film formed on the surfaces of raised portions of the conductive material while leaving the protective film formed on the surfaces of recessed portions of the conductive material. By subsequent electrolytic polishing of the conductive material, the raised portions of the conductive material can be preferentially processed, whereby the surface irregularities of the conductive material can be smoothed out. A polishing pad for CMP, for example, can be used as the polishing pad.

A description will now be made of experiments on processing (polishing) of copper which were carried out with various electrolytic liquids, using a chip-testing machine capable of processing a 40 mm-diameter area. The chip-testing machine is capable of controlling the electrode potential of copper and performs processing of copper by polishing an exposed copper surface with a polishing pad attached to a processing table while applying a voltage between the copper and an opposing electrode. Polishing (processing) of copper was carried out by rotating the polishing table at 250 rpm (linear velocity 0.78 m/s at a position of 30 mm distance from the center) while pressing the polishing pad against a substrate sample having a copper surface at a pressure of 0.5 psi ($35 \text{ g/cm}^2$). During processing, current density or the electrode potential of copper was kept constant. Current density or the electrode potential can be measured even when the polishing pad is not in contact with a copper surface (pressure 0 psi) as in the below-described test for determining the effect of a corrosion inhibitor.

The substrate sample, which was used in the processing experiments, is a silicon substrate with a copper film (copper blanket wafer), having surface layers of: a oxide film ($SiO_2$) having a thickness of about 250 nm; a barrier metal film of TaN having a thickness of 30 nm; a copper seed film having a thickness of 100 nm; and a copper plated film having a thickness of 1500 nm, formed in this order.

A. Relationship of various organic acids with electrode potential

Table 1 shows electrode potentials in polishing of the copper surface of the above-described sample wafer, carried out at a constant current density ($40 \text{ mA/cm}^2$) in an electrolytic liquid, using the above-described chip-testing machine and various types of organic acids in the electrolytic liquid. A lower electrode potential in the table indicates that a higher electric current will flow and thus the processing rate will be higher, as compared to a higher electrode potential, if processing is carried out to the same level of electrode potential. A lower electrode potential is therefore preferred.

Table 1

| No. | Electrolyte | Concentration [mol/l] | pH | Electrode potential At 40 mA/cm$^2$ [VvsAg/AgCl] |
|-----|-------------|------------------------|-----|------------------------------------------------|
| 1 | Malonic acid | 1 | 4 | 4.03 |
| 2 | Maleic acid | 1 | 4 | 4.33 |
| 3 | Citric acid | 1 | 4 | 5.36 |
| 4 | Glycolic acid | 1 | 4 | 5.47 |

(continued)

| No. | Electrolyte | Concentration [mol/l] | pH | Electrode potential At 40 mA/cm$^2$ [VvsAg/AgCl] |
|---|---|---|---|---|
| 5 | Malic acid | 1 | 4 | 5.73 |
| 6 | Glyoxylic acid | 1 | 4 | 4.99 |
| 7 | Ascorbic acid | 1 | 4 | 7.55 |

In table 1, the organic acids other than ascorbic acid have a carboxyl group. It is apparent from the data in Table 1 that the use of any of the organic acids having a carboxyl groups provides a low electrode potential as compared with the use of ascorbic acid having no carboxyl group (i.e., 7.55V vs. Ag/AgCl), and therefore the organic acids having a carboxylic acid are preferred.

B. Relationship of various strong acids with electrode potential

Table 2 shows electrode potentials in polishing of the copper surface of the above-described sample wafer, carried out at a constant current density (40mA/cm$^2$) in an electrolytic liquid, using the above-described chip-testing machine and various types of strong acids in the electrolytic liquid. A lower electrode potential in the table indicates that a higher electric current will flow and thus the processing rate will be higher, as compared to a higher electrode potential, if processing is carried out at the same level of electrode potential. A lower electrode potential is therefore preferred.

Table 2

| No. | Electrolyte | Concentration [mol/l] | pH | Electrode potential At 40 mA/cm$^2$ [VvsAg/AgCl] |
|---|---|---|---|---|
| 1 | Methanesulfonic acid | 1 | 0.5 | 1.38 |
| 2 | Phosphoric acid | 1 | 0.81 | 4.24 |
| 3 | Nitric acid | 1 | 0.31 | 1.24 |
| 4 | Sulfuric acid | 1 | 0.26 | 0.95 |

The data in Table 2 shows that the electric potential is higher in electrolytic polishing using the electrolytic liquid containing phosphoric acid (No. 2) than in electrolytic polishing using the electrolytic liquid containing methansulfonic acid (No. 1) or nitric acid (No. 3). Roughening of the processed surface was observed in electrolytic polishing using the electrolytic liquid containing nitric acid (No. 3) or the electrolytic liquid containing sulfuric acid (No. 4), whereas the processed surface was found to be in an appreciably better state in electrolytic polishing using the electrolytic liquid containing methansulfonic acid (No. 1). As can be seen from the above results, methanesulfonid aid is the most preferable electrolyte of the strong acids tested.

C. Decrease in electrode potential by combination of organic acid with strong acid

Table 3 shows electrode potentials in electrolytic polishing of the copper surface of the above-described wafer sample, carried out using the various electrolytic liquids indicated in Table 3. As is apparent from comparison of the data between No. 1 and No. 2, the electrode potential value 2.04 [V vs. Ag/AgCl] for the electrolytic liquid containing the mixture of the organic acid, malonic acid, and the strong acid, methanesulfonic acid, is lower than the the electrode potential value 4.51 [V vs. Ag/AgCl] for the electrolytic liquid solely containing malonic acid. Similar results were obtained with the use of glycolic acid as an organic acid as shown by the comparative data between No. 3 and N. 4. As will be appreciated from the results obtained, the use of an organic acid in combination with a strong acid in an electrolytic liquid will increase the current density and the processing rate with the same electrode potential as compared to the sole use of the organic acid.

Table 3

| No. | Electrolyte | pH | Electrode potential at 40 mA/cm$^2$ [VvsAg/AgCl] |
|---|---|---|---|
| 1 | 1M Malonic acid | 3 | 4.51 |

(continued)

| No. | Electrolyte | pH | Electrode potential at 40 mA/cm$^2$ [VvsAg/AgCl] |
|---|---|---|---|
| 2 | 1M Malonic acid, 1.2M Methanesulfonic acid | 3 | 2.04 |
| 3 | 1M Glycolic acid | 4 | 5.47 |
| 4 | 1M Glycolic acid, 1.5M Methanesulfonic acid | 4 | 2.56 |

D. Effect of corrosion inhibitor and/or water-soluble polymeric compound

Tables 4-a and 4-b show the results of measurement of the current densities of various electrolytic liquids, each based on the mixture of 1M malonic acid and 1.4M methanesulfonic acid and containing as an additive a corrosion inhibitor and/or a water-soluble polymeric compound as indicated in the Tables 4-a and 4-b, carried out at a constant electrode potential of 2 [V vs. Ag/AgCl] using the above-described chip-testing machine, but without carrying out polishing (pressure 0 psi).

Table 4-a

| No. | Electrolytic liquid | pH | O psi Current density [mA/cm$^2$] |
|---|---|---|---|
| 1 | 1M MA, 1.4M MSA | 3 | 11.7 |
| 2 | 1M MA, 1.4M MSA, 0.1% BTA | 3 | 6.7 |
| 3 | 1M MA, 1.4M MSA, 1% BTA | 3 | 5.4 |
| 4 | 1M MA, 1.4M MSA, 0.5% thiourea | 3 | 8.4 |
| 5 | 1M MA, 1.4M MSA, 0.5% 2-methyl-8-hydroxyquinoline | 3 | 8.3 |
| 6 | 1M MA, 1.4M MSA, 0.5% bismuthiol | 3 | 3.7 |
| 7 | 1M MA, 1.4M MSA, 0.5% 5-methyl-1H-benzotriazole | 3 | 3.3 |
| 8 | 1M MA, 1.4M MSA, 0.5% 3-amino-5-metyl-1,2,4-triazole | 3 | 8.7 |
| 9 | 1M MA, 1.4M MSA, 0.2% BTA,0.2% 2-ethylimidazole | 3 | 5.1 |
| 10 | 1M MA,1.4M MSA,0.2%BTA,0.2%2-ethylimidazole,0.6%APA,0.7%metanol | 3 | 4.9 |
| 11 | 1M MA, 1.4M MSA, 0.3% BTA, 0.6% APA, 0.7% methanol | 3 | 4.3 |
| 12 | 1M MA, 1.4M MSA, 0.3% BTA, 0.6% SPA, 0.7% methanol | 3 | 6.7 |
| 13 | 1M MA, 1.4M MSA, 0.3% BTA, 0.6% PVP, 0.7% methanol | 3 | 4.9 |
| 14 | 1M MA, 1.4M MSA, 0.3% BTA, less than 0.6% dextrin, 0.7% methanol | 3 | 5.4 |
| 15 | 1M MA, 1.4M MSA, 0.3% BTA,0.6% PAA, 0.7% methanol | 3 | 4.7 |
| 16 | 1M MA, 1.4M MSA, 0.3% BTA,0.6% PAA, 0.7% methanol | 4.5 | 5.2 |
| 17 | 1M MA, 1.4M MSA, 0.3% BTA, 0.6% PEG (fw:20000), 0.7% methanol | 3 | 4.8 |
| 18 | 1M MA, 1.4M MSA, 0.3% BTA, 0.6% PEG (fw:1000), 0.7% methanol | 3 | 5.0 |
| 19 | 1M MA, 1.4M MSA, 0.3% BTA, 0.6% polymeric compound A, 0.7% methanol | 3 | 7.0 |
| 20 | 1M MA, 1.4M MSA, 0.1% BTA, 1% polyethyleneimine (mW60,000) | 3 | 6.2 |

Table 4-b

| No. | Electrolytic liquid | pH | O psi Current density [mA/cm2] |
|---|---|---|---|
| 21 | 1M MA, 1.4M MSA, 0.3% BTA, 0.15% polyethyleneimine (mW60,000) | 3 | 4.8 |
| 22 | 1M MA, 1.4M MSA, 0.6% APA, 0.5% aminopyridine | 3 | 8.1 |
| 23 | 1M MA, 1.4M MSA, 0.6% APA, 0.5% 3-amino-5-metyl-1,2,4-triazole | 3 | 8.1 |
| 24 | 1M MA, 1.9M MSA, 0.6% APA, 0.5% salicylaldehyde oxime | 3 | 9.1 |
| 25 | 1M MA, 1.4M MSA, 1% polyethyleneimine | 3 | 10.1 |
| 26 | 1M MA, 1.4M MSA, 0.1% APA | 3 | 9.5 |
| 27 | 1M MA, 1.4M MSA, 1% APA | 3 | 11.4 |
| 28 | 1M MA, 1.4M MSA, 0.1% PEG | 3 | 11.2 |
| 29 | 1M MA, 1.4M MSA, 1% PEG | 3 | 10.4 |

In Tables 4-a and 4-b, the abbreviation MA represents malonic acid, MSA methanesulfonic acid, BTA benzotriazole, APA ammonium polyacrylate, SPA sodium polyacrylate, PVP polyvinylpyrrolidone, PAA polyacrylamide, PEG polyethyleneglycol, and polymeric compound A N,N-diethanol oleic amide. In Tables 4-a and 4-b, the percentages are by weight, and 1M means 1 mol/L.

As shown in Tables 4-a and 4-b, the electrolytic liquids containing either a corrosion inhibitor alone or a corrosion inhibitor and a water-soluble polymeric compound (Nos. 2-24) exhibit lower current densities than the electrolytic liquid containing no such additive (No. 1). This indicates that a corrosion inhibitor, when used either singly or in combination with a water-soluble polymeric compound, can suppress corrosion (electrolytic reaction) of a metal. On the other hand, the use of a water-soluble polymeric compound alone (Nos. 25-30) does not lower the current density of the electrolytic liquid, indicating no effect on suppression of corrosion (electrolytic reaction).

E. Effect of abrasive particles

Using the electrolytic polishing apparatus shown in FIGS. 2 and 3, the influence of the presence or absence of abrasive particles in an electrolytic liquid on a surface roughness of a processed surface and the processing rate was determined. A substrate (workpiece) sample, which was used in this experiment, is a copper blanket wafer. A foamed polyurethane polishing pad (IC 1000, manufactured by Nitta Haas Inc.) was used in this experiment. Electrolytic polishing was carried out under the conditions of: polishing pressure 0.5 psi (35 g/cm$^2$); the relative speed between the polishing pad and the center of the workpiece (substrate W) 1.6m/s; and the flow rate of electrolytic liquid 100 ml/min. A flattening characteristic was evaluated by measuring pattern irregularities formed on the substrate using a sensing pin-type profiler (ULVAC, Dektak 3ST).

Under the above processing conditions, electrolytic polishing of the copper surface of the substrate was carried out using an electrolytic liquid having a pH of 4.3, comprising: 1M malonic acid and 1.4M methanesulfonic acid; 0.3% of benzotriazole; 0.49% of polyacrylic acid (molecular weight: 5000); 0.7% of methanol; 0.05% of surfactant (formaldehyde condensate of β-naphthalenesulfonic acid), MX2045L (kao Corporation); and 0.5% of silica abrasive particles. For comparison, electrolytic polishing was carried out in the same manner using the same electrolytic liquid but not containing abrasive particles. The surface roughening of the processed surface and the processing rate were measured for each of the wafer samples. As a result, the surface roughness $R_{max}$ was 328 nm and the processing rate was 736 nm/min for the sample processed with the electrolytic liquid containing no abrasive particles, whereas the surface roughness $R_{max}$ was 49 nm and the processing rate was 777 nm/min for the sample processed with the electrolytic liquid containing the silica abrasive particles. This demonstrates the fact that the use of abrasive particles in an electrolytic liquid can improve the surface roughness of a processed surface and increase the processing rate.

F. Effect of water-soluble polymeric compound

Using the electrolytic polishing apparatus shown in FIGS. 2 and 3, the influence of the presence or absence of a water-soluble polymeric compound in an electrolytic liquid on the processing rate, elimination of a level difference in a processing surface and the surface roughness of the processed surface was determined. A substrate (workpiece) sample, which was used in this experiment, is a copper-plated patterned wafer (Sematech 854AZ). The processing conditions were the same as the preceding experiment described under the heading "Effect of abrasive particles" except for changing the polishing pressure to 1.5 psi.

Under the above processing conditions, electrolytic polishing of the copper surface of the substrate sample was carried out using an electrolytic liquid having a pH of 3, comprising: 1M malonic acid and 1.4M methanesulfonic acid; 0.3% of benzotriazole; 0.6% of ammonium polyacrylate (molecular weight: 10,000); 0.7% of methanol; and 0.05% of surfactant (formaldehyde condensate of β-naphthalenesulfonic acid), MX2045L (kao Corporation). Good results were obtained in terms of the processing rate, the elimination of surface level difference and the surface roughness of the processed surface.

For comparison, electrolytic polishing was carried out in the same manner using the same electrolytic liquid (pH 3) but not containing ammonium polyacrylate. As a result, the processing rate, the elimination of surface level difference and the surface roughness of the processed surface were all found to be poor. In particular, etch pits having a diameter of several μm and a depth of several hundred nm were formed in the processed surface. It is believed from the results of this comparative test that the water-soluble polymeric compound, ammonium polyacrylate, enhances the effect of the corrosion inhibitor and, in addition, facilitates mechanical polishing.

G. Effect of starting copper (conductive material) component

Using the electrolytic polishing apparatus shown in FIGS. 2 and 3, the influence of the presence or absence of copper (conductive material), as a starting component, in an electrolytic liquid on the polishing rate and a surface roughness of a processed surface was determined. A substrate (workpiece) sample, which was used in this experiment, is a copper blanket wafer. In this experiment were used electrolytic liquids which had been prepared by adding copper (conductive material) in various amounts to a base liquid having a pH of 3 and comprising: 1M malonic acid and 1.4M methanesulfonic acid; 0.3% of benzotriazole; 0.6% of ammonium polyacrylate (molecular weight: 10,000); 0.7% of methanol; 0.05% of an anionic surfactant (formaldehyde condensate of β-naphthalenesulfonic acid); and 0.5% of abrasive particles. Electrolytic polishing was carried out under the same conditions as described above under the heading "effect of abrasive particles".

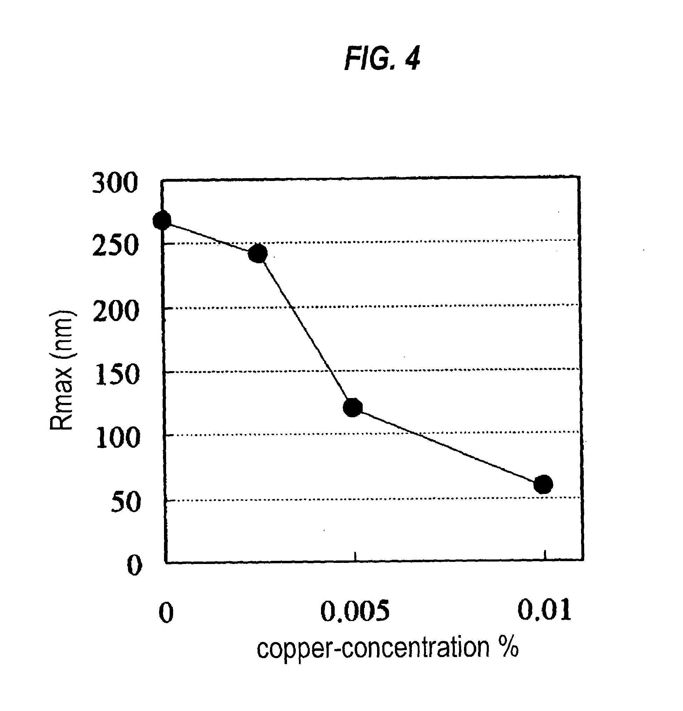

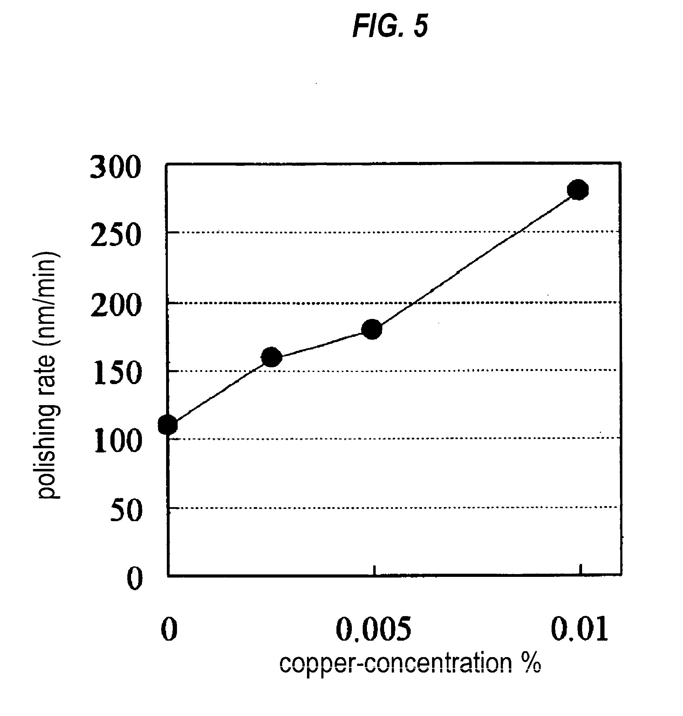

FIG. 4 shows copper-concentration dependency of the surface roughness ($R_{max}$) of the processed surface, and FIG. 5 shows copper-concentration dependency of the polishing rate. As can be seen from FIG. 4, the surface roughness decreases with an increase in the concentration of copper in the electrolytic liquid, and the use of the electrolytic liquid having a copper concentration of not less than 0.005% provides the surface roughness of the polished surface which is less than 1/2 of the surface roughness obtained by the use of the electrolytic liquid containing no copper as a starting component. As can be seen from FIG. 5, the use of the electrolytic liquid having a copper concentration of not less than 0.01% provides the polishing rate which is more than 2.5 times the polishing rate attained by the use of the electrolytic liquid containing no copper as a starting component.

A description will now be made of a process for removing an unnecessary portion of a film of interconnect material formed on a barrier film in a substrate as a polishing object, thereby exposing the barrier film.

The process comprises the steps of: a first step of polishing a conductive material (i) lying over interconnect portions at a lower polishing rate than that of the other conductive material (ii) lying outside the interconnect portions so that the conductive material (i) becomes raised with respect to the conductive material (ii); and a second step of polishing the conductive material (ii) until the barrier film becomes exposed while polishing the raised conductive material (i). In the two-step process, an electrolytic liquid (hereinafter referred to as second electrolytic liquid) is used throughout the process.

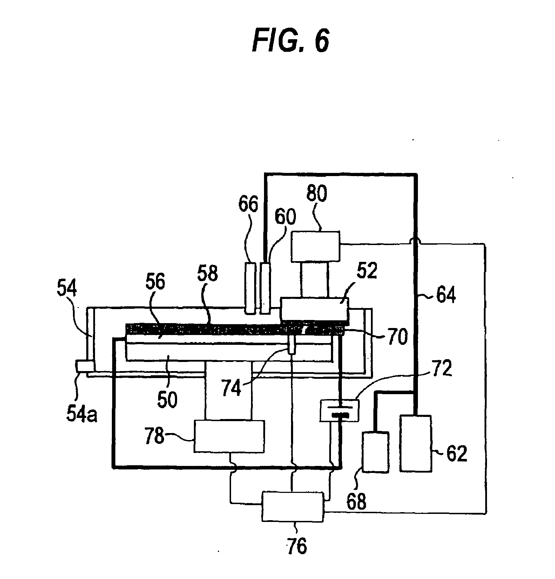

FIG. 6 is a vertical sectional front view of an electrolytic polishing apparatus for carrying out this process. In FIG. 6, the same or equivalent members as the electrolytic polishing apparatus shown in FIG. 2 and 3 are given the same reference numerals, and a duplicate description thereof will be omitted.

Above a polishing table 50 is disposed an electrolytic liquid supply nozzle 60 for supplying an electrolytic liquid (second electrolytic liquid) for the present barrier layer-exposing process to the upper surface of the polishing table 50 during polishing. The electrolytic liquid supply nozzle 60 is connected to an electrolytic liquid supply line 64 which extends from an electrolytic liquid storage tank 62 for temporary storage of the second electrolytic liquid, and which is provided with a not-shown electrolytic liquid supply means, such as a tube pump, a diaphragm pump or a bellows pump. Above the polishing table 50 is also disposed a pure water supply nozzle 66 for supplying rinsing or cleaning pure water to the upper surface of the polishing table 50 after polishing.

In this embodiment, an additive component (s) of the second electrolytic liquid which easily precipitates or decomposes is stored in a separate storage container 68 from the electrolytic liquid storage tank 62, and is added to the second electrolytic liquid stored in the electrolytic storage tank 62 to adjust the liquid into a predetermined condition before supplying the liquid from the electrolytic liquid supply nozzle 60 to the upper surface of the polishing table 50. In some cases, however, it is possible not to provide the storage tank 68 and to directly supply the second electrolytic liquid, which has been prepared and stored in the electrolytic liquid storage tank 62, from the electrolytic liquid supply nozzle 60 to the upper surface of the polishing table 50.

A film thickness detection sensor 74, e.g., comprised of an eddy current sensor, for detecting a film thickness of a (remaining) surface conductive material, such as copper 34, of a substrate W is embedded in the polishing table 50 with the upper surface of the sensor exposed on the surface of the processing electrode 56. An output signal from the film thickness detection sensor 74 is inputted into a control section 76 via a not-shown slip ring, and a power source 72, a table drive section 78 for rotating the polishing table 50, a holder drive section 80 for rotating and vertically moving a substrate holder 52, etc. are controlled by an output signal from the control section 78.

The film thickness detection sensor 74 also detects an end point of polishing by sensing of the film thickness of conductive material, and outputs a signal to terminate polishing. In terminating polishing, it is preferred to first stop the application of a voltage and then stop the supply of the second electrolytic liquid in order not to impair the polishing performance.

A description will now be made of the second electrolytic liquid for use in the present barrier layer-exposing process carried out by the electrolytic polishing apparatus shown in FIG. 6.

The second electrolytic liquid contains (1) at least one organic acid or its salt, (2) at lest one strong acid having a sulfonic acid group, (3) a corrosion inhibitor, (4) a water-soluble polymeric compound, (5) a pH adjustor, (6) abrasive particles and (7) a surfactant. The second electrolytic liquid may also contain, as a starting component, (8) the same conductive material as the polishing object, e.g., copper.

The pH of the second electrolytic liquid for the present process is preferably adjusted to 3 to 6, more preferably 3 to 4.5. An interaction between a polishing object (conductive material), such as copper, in an oxidized state and a corrosion inhibitor, a water-soluble polymeric compound and an organic acid differs depending on the pH of the electrolytic liquid, producing a difference in the quality of a protective film which is formed on the surface of the conductive material, such as copper, during polishing. For example, when a polymeric compound is involved in the formation of a complex between copper and a corrosion inhibitor, such as BTA (benzotriazole), the protecting effect of BTA is low and the resistance to electrolytic etching is poor at around neutral pH of the electrolytic liquid. On the other hand, a dense strong protective film can be formed when the pH of the second electrolytic liquid is adjusted to 3 to 4.5.

As with the above-described electrolytic liquid, the organic acid contained in the second electrolytic liquid for the present process needs to form a soluble complex with a metal (conductive material), such as copper, as a polishing object. In particular, the organic compound needs to make a coordinate bond with a metal, such as copper, to form a complex which is soluble in the aqueous solution. At least the organic acid itself must be water-soluble. As with the above-described electrolytic liquid, the organic acid preferably has at least one carboxyl group (-COOH) in the molecule, or also has at least one hydroxyl group (-OH) together with a carboxyl group(s) in the molecule. The same specific organic acids as mentioned above can be used also for the second electrolytic liquid.

Of such usable organic acids, malonic acid, succinic acid, citric acid, glycolic acid, lactic acid and gluconic acid are particularly preferred.

The corrosion inhibitor contained in the second electrolytic liquid preferably is a nitrogen-containing heterocyclic compound and may be one which is known to form a compound with a metal, such as copper, to be processed, and form a protective film on the metal surface, thereby preventing corrosion of the metal. Such a corrosion inhibitor has the effect of preventing excessive etching, thus preventing dishing.

Benzotriazole (BTA), which is well known as a corrosion inhibitor for copper, or its derivatives can be preferably used as a corrosion inhibitor in the second electrolytic liquid. Examples of the derivatives include 5-methyl-1H-benzotriazole (tolyltriazole), 1-hydroxybenzotriazole, 4-hydroxybenzotriazole, 5-chlorobenzotriazole, benzotriazole-5-carboxylic acid, and 5-nitrobenzotriazole. From the viewpoint of effectively inhibiting corrosion of a processing surface and, in addition, obtaining a glossy processed surface with little surface roughening, it is preferred to use benzotriazole or 5-methyl-1H-benzotriazole.

Examples of other usable corrosion inhibitors, having the effect of preventing excessive polishing and thereby preventing dishing after forming a protective film on the surfaces of recessed portions of a polishing object, such as copper, and clearing off a conductive material, such as copper, between interconnect portions, may include indole; diazole, triazole or tetrazole derivatives such as 2-ethylimidazole, benzimidazole, 2-mercaptobenzimidazole, 3-amino-1,2,4-triazole, 3-amino-5-methyl-4H-1,2,4-triazole, and 5-amino-1H-tetrazole; thiazole derivatives such as 2-mercaptobenzothiazole, sodium 2-mercaptobenzothiazole, 2-methylbenzothiazole, (2-benzothiazolylthio) acetic acid, 3-(2-benzothiazolylthio) propionic acid, 2-mercapto-2-thiazolin, 2-mercaptobenzoxazole, 2-5-dimercapto-1,3,4-thiadiazole (bismuthiol), 5-methyl-1,3,4-thiadiazole-2-thiol, and 5-amino-1,3,4-thiadiazole-2-thiol; pyridine; phenazine; acridine; 1-hydroxypyridine-2-thione; 2-aminopyridine; 2-aminopyrimidine; trithiocyanuric acid; 2-dibutylamino-4,6-dimercapto-s-triazine; 2-anilino-4,6-dimercapto-s-triazine; 6-aminopurine; 6-thioguanine; thiourea; salicylic acid and its derivatives such as salicylaldehyde and salicylaldehyde oxime; and hydroxyquinolines such as 8-quinolinol and 2-methyl-8-quinolinol (2-methyl-8-hydroxyquinoline). These compounds may be used either singly or as a mixture of two or more.

These compounds can form a stronger protective film on the surfaces of recessed portions of a polishing object, such as copper, by their adsorption onto the surface of copper or copper oxide or by the formation of a chelate complex or a polymeric complex with copper or copper oxide.

The water-soluble polymeric compound contained in the second electrolytic liquid for the present process, together with the corrosion inhibitor, forms a uniform protective film, which effectively prevents excessive etching and flattens a metal surface, such as copper. The viscosity of the electrolytic liquid containing the water-soluble polymeric compound is high in the vicinity of a metal surface (processing surface), such as copper. A viscous film is formed on recessed portions of fine irregularities present in the metal surface, and the fine irregularities are polished and removed, providing a glossy surface.

Examples of preferable polymeric compounds having the above effect are those compounds as exemplified above with reference to the above-described electrolytic liquid, such as polyacrylic acid and its salts. Preferable molecular weight and concentration of the present water-soluble polymeric compound are also the same as described above.

When electrolytic polishing is carried out using an electrolytic liquid containing a corrosion inhibitor but not containing a water-soluble polymeric compound, a protective film, which is strong but not uniform, is formed on a processing surface. If polishing is continued, variation in the processing rate of the processing surface, surface roughening of the processing surface, the formation of pits in the processing surface, etc. are likely to occur. Such drawbacks can be prevented and uniform polishing becomes possible by adding a water-soluble polymeric compound to the electrolytic liquid. Thus, a water-soluble polymeric compound has the effect of adjusting the strength of a protective film formed by a corrosion inhibitor and making the protective film uniform. Polishing may therefore be carried out in such a manner that in an initial polishing period, an electrolytic liquid containing a water-soluble polymeric compound in a low concentration is supplied to the surface of a polishing object, such as copper, in order to form a strong protective film on the surfaces of recessed portions and, at a time point, near the end point of polishing, when a barrier film has become exposed, an electrolytic liquid containing the polymeric compound in a high concentration begins to be supplied to adjust the strength of the protective film so that the surface state becomes uniform.

As with the above-described electrolytic liquid, a pH adjustor may be added to the second electrolytic liquid so as to adjust the pH of the second electrolytic liquid.

The pH of the second electric solution is generally 2 to 10. The pH of the second electrolytic liquid is preferably 3 to 6 when the liquid is used in such a polishing process as for the formation of copper interconnects in a semiconductor substrate, for which a high processing rate and a flat glossy processed surface without surface roughening are required. The pH of the second electric liquid is preferably 3 to 4.5 when the liquid is used in a barrier film-exposing process in which an initial recessed portion is changed into a raised shape in the course of polishing, and polishing is continued at least until part of a barrier film becomes exposed.

The second electrolytic liquid may contain abrasive particles. The abrasive particles, besides the effect of mechanically polishing away a metal (polishing object), such as copper, also have the effect of mechanically polishing away a protective film, formed by the corrosion inhibitor and the water-soluble polymeric compound, when also using a polishing pad.

The second electrolytic liquid for the present process may contain the same surfactant as that of the above-described electrolytic liquid. Further, the second electrolytic liquid may have the same electric conductivity as the above-described electrolytic liquid.

An example of the second electrolytic liquid has a pH of 3 to 6, preferably 3 to 4.5, and comprises (1) 2 to 80% by weight of an organic acid, (2) 2 to 20% by weight of a strong acid having a sulfonic acid group, (3) 0.01 to 1% by weight of a corrosion inhibitor, (4) 0.01 to 1% by weight of a water-soluble polymeric compound, (5) 0.01 to 2% by weight of abrasive particles, (6) 0.01 to 1% by weight of a surfactant, and an aqueous solvent. The aqueous solvent may be deionized water, preferably ultrapure water.

A description will now be made of electrolytic polishing by the electrolytic polishing apparatus shown in FIG. 6. First, the substrate holder (polishing head) 52 holding a substrate W with its front surface facing downwardly is positioned at a predetermined position above the polishing table 50. Next, while rotating the polishing table 50, a second electrolytic liquid is supplied from the electrolytic liquid supply nozzle 60 to the upper surface of the polishing table 50 and, at the same time, while rotating the substrate holder (polishing head) 52 together with the substrate W, the substrate holder (polishing head) 52 is lowered to press the substrate W against the polishing pad 58, e.g., at a pressure of not more than 1 psi (70 g/cm$^2$). When the feeding electrode 70 comes into contact with a surface conductive material, such as copper 34, of the substrate W, the feeding electrode 70 is connected to the anode of the power source 72 and the processing electrode 56 is connected to the cathode of the power source 72 to apply a predetermined voltage between the processing electrode 56 and the surface conductive material, such as copper 34, of the substrate W, thereby causing an electrolytic reaction at the surface of the conductive material, such as copper 34, serving as an anode, to polish the conductive material. During the polishing, the processing electrode 56 and the surface conductive material, such as copper 34, of the substrate W are electrically connected via the second electrolytic liquid held in the through-holes 58a of the polishing pad 58.

A description will now be made of the process of carrying out electrolytic polishing by rubbing the surface of the conductive material, such as copper 34, with the polishing pad 58, thereby exposing the barrier film. First, raised portions of the initial surface irregularities of the conductive material are polished at a higher polishing rate than that of recessed portions of the surface irregularities in such a manner that the recessed portions come to take raised shapes, and polishing is continued until immediately before exposure of the barrier film 30 (see FIG. 1B) or until at least part of the barrier film 30 becomes exposed.

In particular, during the polishing, the surface of the copper 34 of the substrate W, serving as an anode, is anodically oxidized while a protective film is formed on the surface of the copper 34 by a corrosion inhibitor and a water-soluble polymeric compound in the second electrolytic liquid. While the copper 34 of the substrate W, which is being pressed on the polishing pad 58, moves relative to the polishing pad 58 by the rotational movement of the substrate W and the rotational movement of the polishing table 50, and is thus mechanically polished, the protective film formed on recessed portions present in the surface of the copper 34 of the substrate W is not removed, whereas the protective film formed on raised portions present in the surface of the copper 34 is either removed or weakened by rubbing by the polishing pad, whereby electrolytic polishing proceeds only on the protective film formed on the raised portions present in the surface of the copper 34. By thus selectively removing only the protective film on the raised portions of the surface irregularities of the copper 34 of the substrate W, the copper 34 is selectively removed in the raised portions.

Unlike raised portions of the copper 34 which are continuously polished by the polishing pad 58, a strong protective film is formed by the corrosion inhibitor, the water-soluble polymeric compound and a copper oxide film on the surfaces of recessed portions of the copper 34 which are less subject to mechanical polishing by the polishing pad 58. Therefore, the polishing rate of the surfaces of the recessed portions of the initial surface irregularities of the copper 34 becomes low whereby the recessed portions come to take raised shapes. The raised-shaped portions with the protective film formed thereon are less likely to cause dishing when polishing is continued, as compared to the case of polishing the recessed portions without changing their shapes. Thus, the above process makes it possible to polish a conductive material (interconnect metal) without leaving the conductive material between interconnect portions while minimizing dishing due to over-polishing of the conductive material (interconnect metal) and also minimizing etching at the interface between a barrier film and the metal (conductive material) even when polishing is continued until the barrier film becomes exposed.

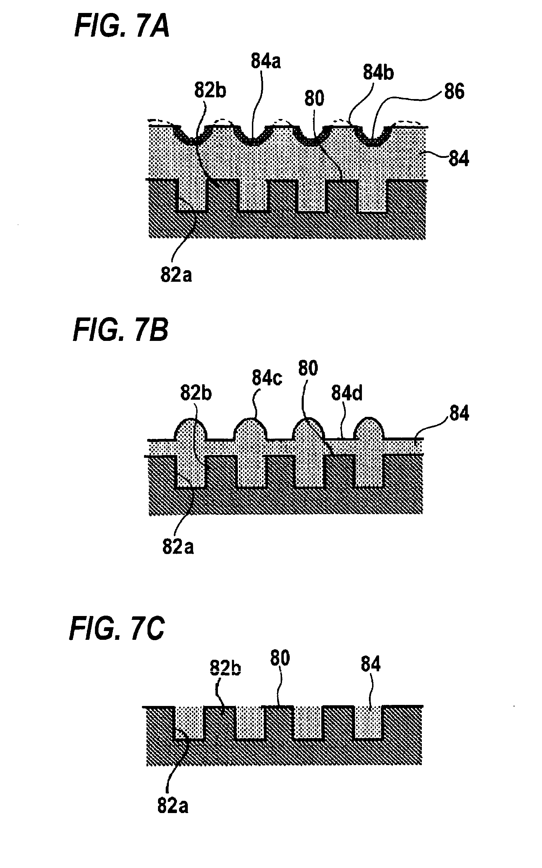

The processing principle will now be described in more detail with reference to the case of polishing copper 84 as a conductive material, lying over a barrier film 80, having such initial surface configuration that initial recessed portions 84a are present at positions corresponding to interconnect portions 82a, and initial raised portions 84b are present at positions corresponding to non-interconnect portions 82b, as shown in FIG. 7A.

In an initial polishing period, a protective film is formed on the surfaces of the initial raised portions 84b of the copper (conductive material) 84, and the protective film is removed by mechanical polishing by the polishing pad 58, while a strong protective film 86, which is more resistant to polishing by the polishing pad 58 than the protective film formed on the initial raised portions 84b, is formed on the surfaces of the initial recessed portions 84a, as shown in FIG. 7A. The use of the second electrolytic liquid containing a corrosion inhibitor enables the formation of the protective film 86, which is stronger than the protective film formed on the initial raised portions 84b, on the surfaces of the initial recessed portions 84a. Accordingly, the polishing rate of the copper 84 in the initial recessed portions 84a, corresponding to the interconnect portions 82a, becomes lower than the polishing rate of the copper 84 in the initial raised portions 84b, corresponding to the non-interconnect portions 82b, whereby raised portions 84c are formed in the surface of copper 84 at positions corresponding to the interconnect portions 82a, while recessed portions 84d are formed at positions corresponding to the non-interconnect portions 82b, as shown in FIG. 7B.

When polishing of the recessed portions 84d and the raised portion 84c is subsequently carried out, the copper 84 in the recessed portions 84d, corresponding to the non-interconnect portions 82b, is removed and at least part of the barrier film 80 begins to be exposed. The polishing rate of the barrier film 80 is so low that the inverted raised portions 84c with the protective film 86 formed thereon are chiefly polished, whereby the inverted raised portions 84c gradually becomes flat, as shown in FIG. 7C.

By thus forming the protective film 86 on the initial recessed portions 84a lying over the interconnect portions 82a and inverting the recessed portions 84a to the raised portions 84c when polishing the conductive material (copper) 84 until the clearing of copper (exposure of the barrier film 80 in the non-interconnect portions 82b), the conductive material (copper) 84 can be effectively removed while preventing dishing in the surface of the conductive material (copper) 84 in the interconnect portions 82a and etching at the interface between the barrier film 80 and the conductive material 84.

After completion of the electrolytic polishing, the processing electrode 56 and the feeding electrode 70 are disconnected from the power source 72, and the supply of the second electrolytic liquid is stopped. Thereafter, the substrate holder (polishing head) 52 is raised, and the polished substrate W is then transported by the substrate holder 52 for the next process.

The barrier film exposed on the surface of the substrate is polished, for example, by CMP.

A description will now be made of voltage (applied voltage) applied between the processing electrode 56 and a surface conductive material, such as copper, of a substrate W during electrolytic polishing. The applied voltage preferably is a direct-current voltage in view of the polishing rate and the cost of the power source 72. Though a constant voltage may be applied from the start to the end of polishing, it is preferred to apply voltage in a stepwise manner as described below.

In the first or initial step of voltage application, a relatively low voltage, for example, 0.1 to 2.5V is applied in order to promote the formation of a protective film on the surfaces of recessed portions of a conductive material, such as copper 34, followed by application of a higher voltage. This is because if a high voltage is applied, the protective film formed on the surfaces of the recessed portions can be broken even when a polishing pad is not in contact with the protective film or is in contact with the protective film at a low pressure, resulting in etching of the conductive material, such as copper, in the recessed portions. Thus, by carrying out polishing at a low applied voltage during an initial polishing period, the growth of a strong protective film can be promoted in those recessed portions which are not in contact with a polishing pad or in contact with the polishing pad at a low pressure, thereby forming the strong protective film on the recessed portions. The applied voltage is then increased to carry out polishing of raised portions. In this manner, a protective film can be formed effectively on the surfaces of recessed portions.

In bulk polishing (polishing until just before a barrier film becomes exposed) , polishing is carried out at a high applied voltage, for example, not less than 3.5V in order to increase the polishing rate. In electrolytic polishing, in general, the use of a higher applied voltage provides a higher polishing rate. A too-high applied voltage, however, promotes the generation of gas bubbles which will cause the formation of pits in a processed surface and roughening of the surface. It is therefore preferred to use an applied voltage of not more than 10V, more preferably not more than 5V. Upon detection of the beginning of exposure of a barrier film with the film thickness detection sensor 74, the applied voltage is lowered to 1/10 to 3/4. This can prevent over-polishing of a conductive material in interconnect potions and can reduce damage to the interconnect material in the interconnect portions. The applied voltage after the beginning of exposure of a barrier film is preferably not more than 1/2 of the applied voltage in bulk polishing.

The use of a pulse voltage enables efficient flattening. In the case of an on-off pulse, for example, etching progresses during "on", and the formation of a protective film is promoted during "off". When using a pulse voltage in electrolytic polishing of copper, however, the polishing rate will considerably decrease depending on the duty ratio. For example, when the on/off time ratio is 1:1, i.e., duty ratio of 50%, the polishing rate decreases by about half.

The duty ratio (D) indicates the percentage of a time period, during which the electric potential of a conductive material with respect to a processing electrode is kept positive, per cycle of a pulse voltage or, in the case where a pulse voltage changes periodically in a positive potential range, indicates the percentage of a time period during which the pulse voltage is positive with respect to the average potential, and can be determined by the following equation:

$$D = (T_p/T_{tot}) \times 100 \quad (T_p: \text{ pulse width, } T_{tot}: \text{ cycle})$$

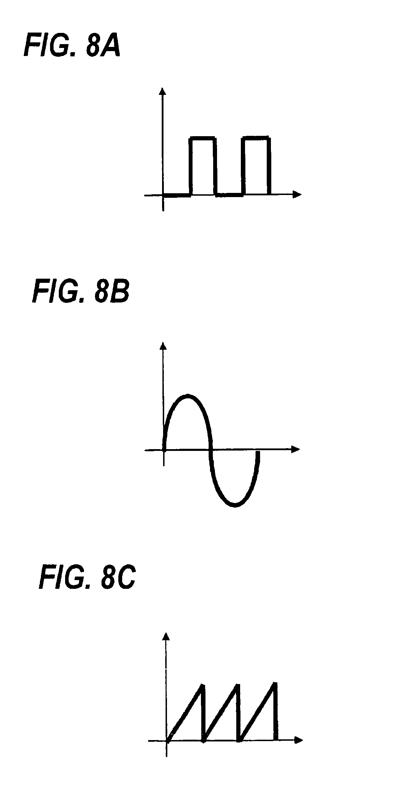

In bulk polishing (polishing until just before a barrier film becomes exposed) for which a high polishing rate is necessary, it is preferred to use a continuous wave of direct-current voltage. In polishing after a barrier film has begun to be exposed, on the other hand, it is preferred to use a pulse waveform, a repetition of a decrease and an increase of voltage, in order to prevent rapid dissolution of a conductive film, such as copper. Examples of usable pulse waveforms include a rectangular wave as shown in FIG. 8A, a sine wave as shown in FIG. 8B, a ramp wave (serrate wave) as shown in FIG. 8C, and a triangular wave (not shown). A sine wave, a ramp wave and a triangular wave, whose rise time from the lowest potential to the highest potential is relatively long, are preferred for preventing rapid dissolution of a conductive material, such as copper. The rise time of the pulse wave used is preferably $1\mu s$ to 1s.

The lowest potential in a rectangular wave, a triangular wave, a ramp wave, a sign wave, etc. may be any of a negative potential, zero potential and a positive potential of a conductive material with respect to a processing electrode. A negative potential is preferred for the purpose of suppressing the generation of oxygen bubbles. However, in the case of a conductive material such as copper for which polishing progresses when its potential is positive with respect to a processing electrode, a precipitate can be deposited on the surface of the conductive material and, in addition, the polishing rate will lower. Therefore, the lowest potential is preferably zero or a positive potential. These parameters may be appropriately determined depending on the amount of a remaining film, the processing time, etc.

It is preferred that the frequency of the pulse voltage applied be not synchronized with the cycle of passage of a through-hole of a polishing pad over a particular portion of a conductive material. This can prevent a non-polished portion in the polished surface of the conductive material, thus preventing lowering of the uniformity of the polished surface.

H. Effect of corrosion inhibitor

In order to determine the metal-protecting effect of a corrosion inhibitor added to an electrolytic liquid, an experimental processing (polishing) of copper was carried out, using a chip-testing machine capable of processing a 40 mm-diameter area.

The chip-testing machine is capable of controlling the electrode potential of copper and performs processing of copper by polishing an exposed copper surface with a polishing pad attached to a processing table while applying a voltage between the copper and a processing electrode (opposing electrode). Polishing of copper was carried out by rotating the polishing table at 250 rpm (linear velocity 0.78 m/s at a position of 30 mm distance from the center) while pressing the polishing pad against a substrate sample having a copper surface at a pressure of 0.5 psi (35 g/cm$^2$). During processing, current density or the electrode potential of copper was kept constant. Current density or the electrode potential can be measured even when the polishing pad is not in contact with a copper surface (pressure 0 psi) .

The substrate sample, which was used in the processing experiment, is a silicon substrate with a copper film (copper blanket wafer), having surface layers of: a oxide film (SiO$_2$) having a thickness of about 250 nm; a barrier metal film of TaN having a thickness of 30 nm; a copper seed film having a thickness of 100 nm; and a copper plating film having a thickness of 1500 nm, formed in this order.

Table 5 shows the results of measurement of the current densities of various electrolytic liquids, each based on the mixture of 1M (mol/L) malonic acid and 1.4M (mol/L) methanesulfonic acid, containing various corrosion inhibitors and water-soluble polymeric compounds as indicated in the Table 5, carried out at a constant electrode potential of 2 [V vs. Ag/AgCl] of copper using the above-described chip-testing machine. The measurement was carried out in the both cases of not carrying out polishing (pressure 0 psi) and carrying out polishing (pressure 0.5 psi).

<u>Table 5</u>

| No. | Electrolytic liquid | pH | 0 psi<br>Current density [mA/cm$^2$] | 0.5 psi<br>Current density [mA/cm$^2$] |
|---|---|---|---|---|
| 1 | 1M MA, 1.4M MSA, | 3 | 11.7 | 37.0 |
| 2 | 1M MA, 1.4M MSA, 0.5% thiourea | 3 | 8.4 | 36.6 |
| 3 | 1M MA, 1.4M MSA, 0.5% 2-methyl-8-hydroxyquinoline | 3 | 8.3 | 17.9 |
| 4 | 1M MA, 1.4M MSA, 1% BTA | 3 | 5.4 | 10.6 |
| 5 | 1M MA, 1.4M MSA, 0.1% BTA | 3 | 6.7 | 13.8 |
| 6 | 1M MA, 1.4M MSA, 0.5% bismuthiol | 3 | 3.7 | 15.8 |
| 7 | 1M MA, 1.4M MSA, 0.5% 5-methyl-1H-benzotriazole | 3 | 3.3 | 12.2 |
| 8 | 1M MA, 1.4M MSA, 0.2% BTA, 0.2% 2-ethylimidazole | 3 | 5.1 | 17.9 |
| 9 | 1M MA, 1.4M MSA, 0.3% BTA, 0.6% APA, 0.7% methanol | 3 | 4.3 | 17.8 |
| 10 | 1M MA, 1.4M MSA, 0.5% 3-amino-5-metyl-1,2,4-triazole | 3 | 8.7 | |
| 11 | 1M MA, 1.4M MSA, 0.5% aminopyridine, 0.6% APA | 3 | 8.1 | |
| 12 | 1M MA, 1.4M MSA, 0.5% salicylaldehyde oxime, 0.6% APA | 3 | 9.1 | |

In Table 5, the abbreviation MA represents malonic acid, MSA methanesulfonic acid, BTA benzotriazole, and APA ammonium polyacrylate. The percentages in Table 5 are by weight.

As will be appreciated from comparison of the data in Table 5 in the case of not carrying out polishing (pressure 0 psi), the electrolytic liquids containing either a corrosion inhibitor alone or a corrosion inhibitor and a water-soluble polymeric compound (Nos. 2-12) exhibit lower current densities than the electrolytic liquid containing no such additive (No. 1). This indicates that a corrosion inhibitor, when used either singly or in combination with a water-soluble polymeric compound, forms a protective film, thus suppressing corrosion (electrolytic reaction) of the metal. Further, as can be seen from comparison of the data in the case of carrying out polishing (pressure 0.5 psi), the current densities of the electrolytic liquids Nos. 3-9 are considerably lower than the current density of the electrolytic liquid No. 2, indicating that the former electrolytic liquids can form stronger protective films which are more resistant to pad polishing.

Using two electrolytic liquids each having a pH of 4 and comprising: 1M (mol/L) malonic acid and 1.4M (mol/L) methanesulfonic acid; 0.49% of polyacrylic acid (average molecular weight: 5000); 0.7% of methanol; 0.05% of surfactant (formaldehyde condensate of β-naphthalenesulfonic acid), MX2045L (kao Corporation); and 0.05% of silica abrasive particles, one liquid containing 5-methyl-1H-benzotriazole and the other liquid containing 3-amino-5-methyl-4H-1,2,4-triazole as a corrosion inhibitor, polishing of a substrate sample was carried out by the chip-testing machine at a current density of 40 mA/cm$^2$ and a pad pressure of 0.5 psi. The substrate sample, which was used in this experiment, is a 4-inch copper-plated patterned wafer (Sematech 854AZ) having a barrier film and a copper film formed on a silicon base. As a result, the substrate samples, which had been polished using the two electrolytic liquids, both had a good glossy processed surface.

I. Effect of pH of electrolytic liquid (before exposure of barrier film between interconnect portions)

Using the electrolytic polishing apparatus shown in FIG. 6, the effect of the pH of an electrolytic liquid on a protective film formed on the surface irregularities of a substrate sample and on dishing in interconnect portions was determined. The substrate sample, which was used in this experiment, is a 4-inch copper-plated patterned wafer (Sematech 854AZ) having a barrier film and a copper film formed on a silicon base. A foamed polyurethane polishing pad (IC 1000, manufactured by Nitta Haas Inc.) was used in this experiment. Electrolytic polishing was carried out under the conditions of: polishing pressure 0.5 psi (35 g/cm$^2$); the relative speed between the polishing pad and the center of the workpiece (substrate W) 1.6 m/s; and the flow rate of electrolytic liquid 100ml/min. Measurement of surface irregularities was carried out by using a sensing pin-type profiler (ULVAC, Dektak 3ST).

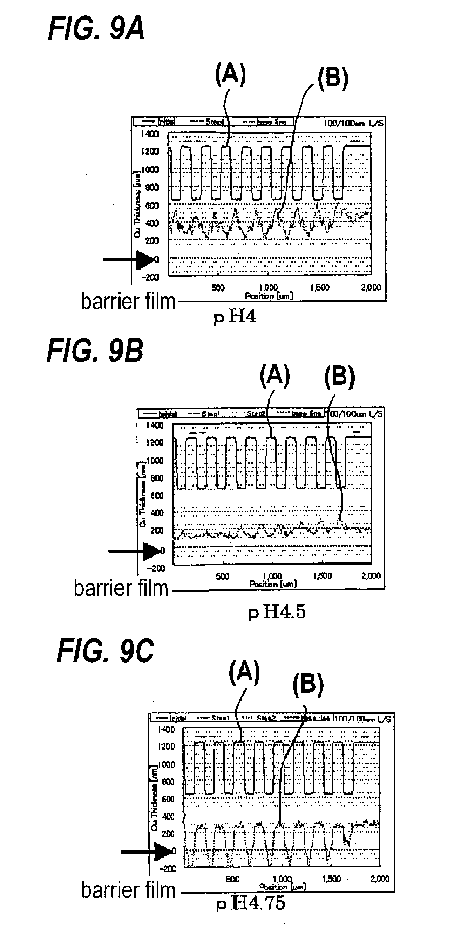

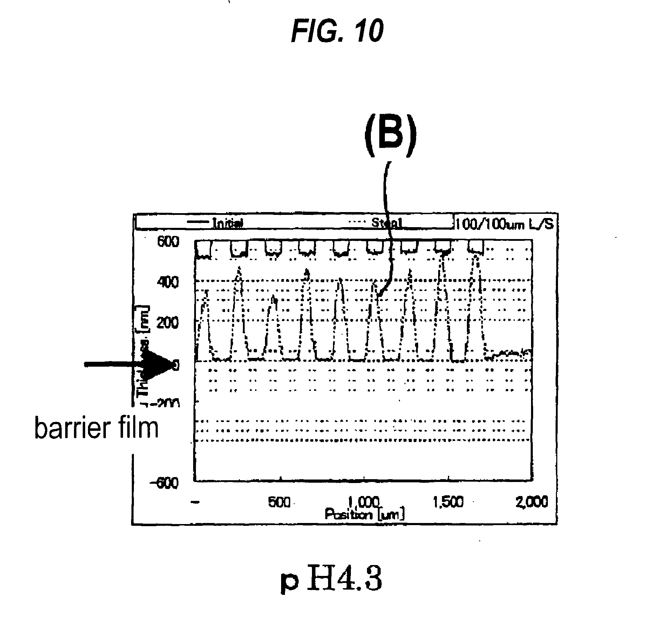

Under the above processing conditions, electrolytic polishing of the copper surface of the substrate sample was carried out using electrolytic liquids respectively having a pH of 4, 4.5 and 4.75, each comprising: 1M (mol/L) malonic acid and 1.4M (mol/L) methanesulfonic acid; 0.3% of benzotriazole; 0.6% of ammonium polyacrylate (average molecular weight: 10000); 0.7% of methanol; 0.05% of surfactant (formaldehyde condensate of β-naphthalenesulfonic acid), MX2045L (kao Corporation); and 0.05% of silica abrasive particles. The surface irregularities of the processed surface were measured for each of the wafer samples before the barrier film becomes exposed, i.e., with copper remaining between the interconnect portions. FIGS. 9A through 9C show the results of the measurement. In the respective Figures, the graph (A) shows a cross-sectional profile of the surface of the sample before polishing, and the graph (B) shows a cross-sectional profile of the surface of the sample after polishing. This holds true for FIGS. 10 through 12.

As shown in FIG. 9A, initial recessed portions in the surface of the sample change into raised shapes during polishing as carried out using the electrolytic liquid having a pH of 4. This indicates the formation of a strong protective film on the recessed portions during an initial polishing period. The use of the electrolytic liquid having a pH of 4.5 also changes initial surface recesses of the sample into raised shapes during polishing, as shown in FIG. 9B. Though the electrolytic liquid of pH 4.5 provides a flatter polished surface as compared to the electrolytic liquid of pH 4, the degree of the inversion of surface irregularities is smaller. On the other hand, the use of the electrolytic liquid having a pH of 4.75 in polishing of the sample does not cause the inversion phenomenon of the surface irregularities, as shown in FIG. 9C. This is considered to be due to the fact that the strength of a protective film formed on initial recesses decreases with an increase in the pH of the electrolytic liquid.

J. Effect of pH of electrolytic liquid (upon exposure of barrier film between interconnect portions)

The effect of the pH of an electrolytic liquid on dishing in interconnect portions of a substrate upon the beginning of exposure of a barrier film between the interconnect portions was determined. Using the electrolytic polishing apparatus shown in FIG. 6, electrolytic polishing was carried out in the same manner as described above under the heading "Effect of pH of electrolytic liquid (before exposure of barrier film between interconnect portions)" except for using an electrolytic liquid having a pH of 4.3 and comprising: 1M (mol/L) malonic acid and 1.4M (mol/L) methanesulfonic acid; 0.3% of benzotriazole; 0.49% of polyacrylic acid (average molecular weight: 5000); 0.7% of methanol; 0.05% of surfactant (formaldehyde condensate of β-naphthalenesulfonic acid), MX2045L (kao Corporation); and 0.05% of silica abrasive particles, and carrying out polishing until exposure of the barrier film. Measurement of the surface irregularities of the wafer sample after polishing was carried out in the above-described manner. The results are shown in FIG. 10.

The data in FIG. 10 demonstrates that the copper film maintains raised shapes over the interconnect portions by a protective film formed on the corresponding portions of the copper film, and thus dishing does not occur in the interconnect portions even when the barrier film has become exposed between the interconnect portions.

K. Effect of applied voltage (before exposure of barrier film between interconnect portions)

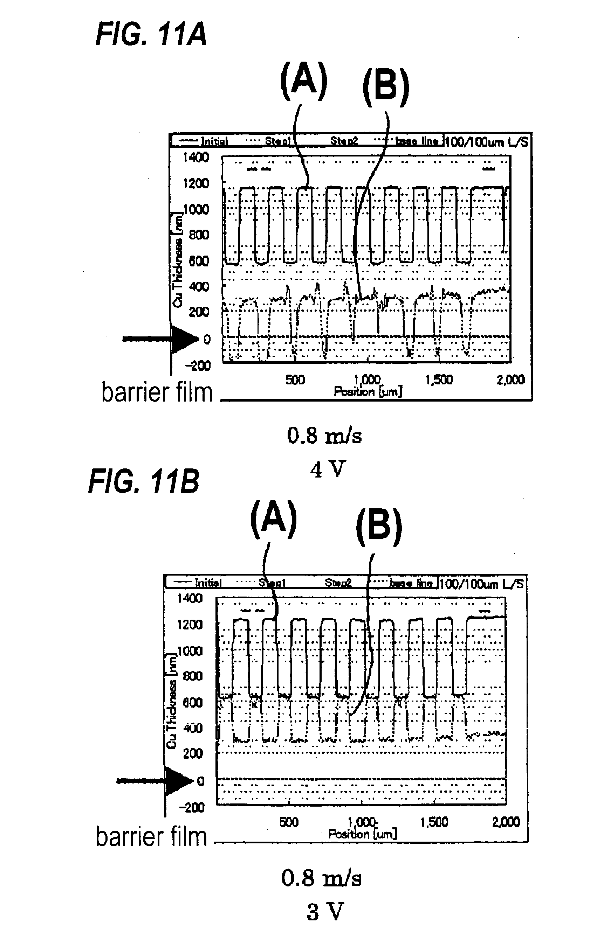

Using the electrolytic polishing apparatus shown in FIG. 6, polishing of the wafer sample was carried out in the same manner as described above under the heading "Effect of pH of electrolytic liquid (before exposure of barrier film between interconnect portions)" using the electrolytic liquid having a pH of 4.5, except for changing the relative speed between the polishing pad and the center of the wafer sample from 1.6 m/s to 0.8 m/s, while applying a voltage of 4V between the processing electrode and the surface copper (conductive material) of the wafer. For comparison, electrolytic polishing of the wafer sample was carried out in the same manner except for changing the applied voltage to 3V. For the respective wafer samples, measurement of the surface irregularities was carried out in the above-described manner. The results are shown in FIGS. 11A and 11B.

As can be seen from FIG. 11A, dishing occurred in the sample processed with the application of a voltage of 4V between the processing electrode and the surface copper (conductive material) of the sample, whereas dishing was not found, but raised-shaped portions were formed in the sample processed with the application of a lowered voltage of 3V, as shown in FIG. 11B. This is considered to be due to the fact that the decrease of the applied voltage results in prevention of breakage of a protective film, leading to prevention of dishing (over-polishing).

L. Effect of applied voltage (upon exposure of barrier film between interconnect portions)

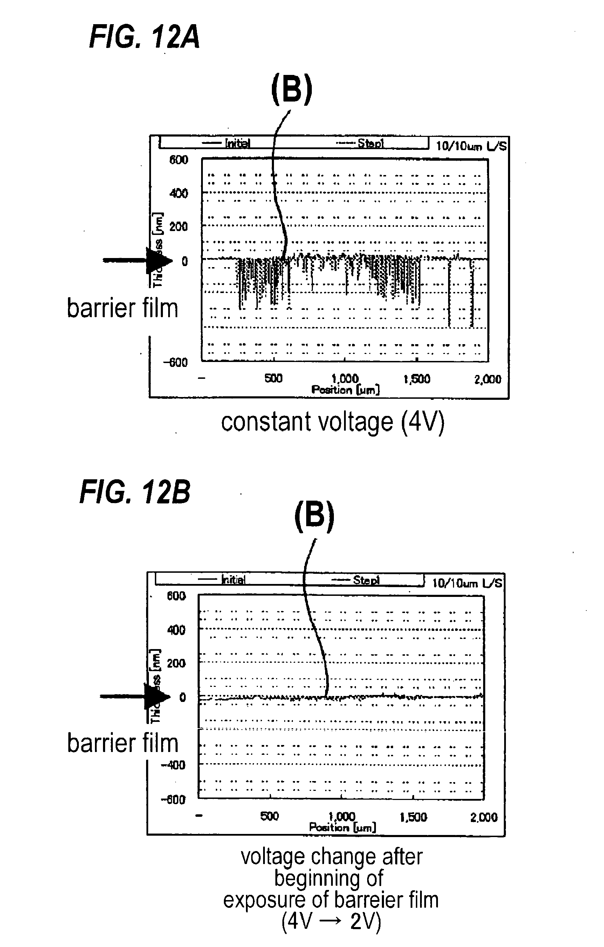

Using the electrolytic polishing apparatus shown in FIG. 6, polishing of the wafer sample was carried out in the same manner as described above under the heading "Effect of applied voltage (before exposure of barrier film between interconnect portions) " except for changing the pH of the electrolytic liquid from 4.5 to 4.3 and carrying out polishing until exposure of the barrier film, while applying a constant voltage of 4V between the processing electrode and the surface copper (conductive material) of the wafer. For comparison, electrolytic polishing of the wafer sample was carried out in the same manner except for decreasing the applied voltage to half, i.e., 2V, upon the beginning of exposure of the barrier film. For the respective wafer samples, measurement of the surface irregularities was carried out in the above-described manner. The results are shown in FIGS. 12A and 12B.

As can be seen from FIG. 12A, over-polishing occurred upon exposure of the barrier film in the sample processed with the application of a constant voltage of 4V, whereas over-polishing was prevented in the sample processed with the initial application of a voltage of 4V, followed by the application of a lowered voltage of 2V after the beginning of exposure of the barrier film, as shown in FIG. 12B. This is considered to be due to the fact that step-wise voltage application effectively prevents breakage of a protective film and concentration of electric field at the interface between the barrier film and the copper (interconnect material) in the interconnect portions.

**Claims**

1.   An electrolytic liquid for use in electrolytic polishing of a surface conductive material of a workpiece, comprising an aqueous solution containing
at least one organic acid or its salt,
at least one strong acid having a sulfonic acid group, a corrosion inhibitor, and
a water-soluble polymeric compound.

2.   The electrolytic liquid according to claim 1, wherein the organic acid has a carboxyl group.

3.   The electrolytic liquid according to claim 2, wherein the organic acid also has a hydroxyl group.

4.   The electrolytic liquid according to claim 1, wherein the organic acid is selected from the group consisting of acetic acid, propionic acid, oxalic acid, malonic acid, succinic acid, glutaric acid, adipic acid, maleic acid, fumaric acid, citric acid, aconitic acid, glyoxylic acid, glycolic acid, lactic acid, gluconic acid, malic acid, tartaric acid, and a mixture thereof.

5.   The electrolytic liquid according to claim 1, wherein the concentration of the organic acid is 0.1 to 80% by weight.

6.   The electrolytic liquid according to claim 1, wherein the strong acid having a sulfonic acid group is selected from the group consisting of methanesulfonic acid, benzenesulfonic acid, taurine, cysteic acid, an alkylbenzene sulfonic acid having 1 to 6 carbons in the alkyl group, trifluoromethanesulfonic acid, fluorosulfonic acid, and a mixture thereof.

7. The electrolytic liquid according to claim 1, wherein the concentration of the strong acid having a sulfonic acid group is 0.1 to 20% by weight.

8. The electrolytic liquid according to claim 1, wherein the corrosion inhibitor is benzotriazole or a derivative thereof.

9. The electrolytic liquid according to claim 8, wherein the concentration of the corrosion inhibitor is 0.001 to 5% by weight.

10. The electrolytic liquid according to claim 1, wherein the water-soluble polymeric compound is selected from the group consisting of polyacrylic acid or a salt thereof, polymethacrylic acid or a salt thereof, polyethylene glycol, polyisopropyl acrylamide, polydimethyl acrylamide, polymethacrylamide, polymethoxyethylene, polyvinyl alcohol, hydroxyethyl cellulose, carboxymethyl cellulose, polyvinylpyrrolidone, and a mixture thereof.

11. The electrolytic liquid according to claim 1, wherein the concentration of the water-soluble polymeric compound is 0.005 to 5% by weight.

12. The electrolytic liquid according to claim 1 further comprising abrasive particles.

13. The electrolytic liquid according to claim 12, wherein the concentration of the abrasive particles is 0.01 to 10% by weight.

14. The electrolytic liquid according to claim 1 further containing a surfactant.

15. The electrolytic liquid according to claim 1 having an electric conductivity of 5 to 200 mS/cm.

16. The electrolytic liquid according to claim 1 having a pH of 2 to 10.

17. The electrolytic liquid according to claim 1 further containing a conductive material, which is the same as the surface conductive material of the workpiece, in an amount of 0.001 to 10% by weight as a starting component.

18. An electrolytic liquid for use in electrolytic polishing of a surface conductive material of a workpiece, comprising (a) 2 to 80% by weight of an organic acid, (b) 2 to 20% by weight of a strong acid having a sulfonic acid group, (c) 0.01 to 1% by weight of a corrosion inhibitor, (d) 0.01 to 1% by weight of a water-soluble polymeric compound, (e) 0.01 to 2% by weight of abrasive particles and (f) 0.01 to 1% by weight of a surfactant, based on the weight of the electrolytic liquid, and having a pH of 2 to 10.

19. An electrolytic polishing method for polishing a surface conductive material of a workpiece, comprising:

applying a voltage between the conductive material and an opposing electrode while rubbing the surface of the conductive material with a polishing pad in the presence of the electrolytic liquid according to claim 1.

20. An electrolytic polishing method for polishing a surface conductive material of a workpiece, comprising:

applying a voltage between the conductive material and an opposing electrode while rubbing the surface of the conductive material with a polishing pad in the presence of the electrolytic liquid according to claim 18.

21. An electrolytic polishing method for polishing and removing a surface conductive material formed on a barrier film of a workpiece, the workpiece having interconnect portions consisting of interconnect recesses filled with the conductive material, in such a manner that only the conductive material lying outside the interconnect portions is removed, comprising:

applying a voltage between the conductive material and an opposing electrode disposed opposite the conductive material while rubbing the surface of the conductive material with a polishing pad in the presence of an electrolytic liquid;

wherein the electrolytic liquid comprises an aqueous solution containing (a) at least one organic acid or its salt, (b) at least one strong acid having a sulfonic acid group, (c) a corrosion inhibitor and (d) a water-soluble polymeric compound; and

wherein the polishing is carried out by a process comprising the steps of;

a first step of polishing the conductive material (i) lying over the interconnect portions at a lower polishing rate than that of the other conductive material (ii) lying outside the interconnect portions so that the conductive material (i) becomes raised with respect to the conductive material (ii), and

a second step of polishing the conductive material (ii) until the barrier film becomes exposed while polishing the raised conductive material (i).

22. The electrolytic polishing method according to claim 21, wherein the pH of the electrolytic liquid is adjusted to 3-4.5.

23. The electrolytic polishing method according to claim 21, wherein the electrolytic liquid further comprises abrasive particles and a surfactant.

24. The electrolytic polishing method according to claim 21, wherein the corrosion inhibitor is benzotriazole or a derivative thereof.

25. The electrolytic polishing method according to claim 24, wherein the derivative is 5-methyl-1H-benzotriazole.

26. The electrolytic polishing method according to claim 21, wherein the corrosion inhibitor is 3-amino-5-methyl-4H-1,2,4-triazole.

27. The electrolytic polishing method according to claim 21, wherein the corrosion inhibitor is bismuthiol or a derivative thereof.

28. The electrolytic polishing method according to claim 21, wherein the corrosion inhibitor is salicylaldehyde or a derivative thereof.

29. The electrolytic polishing method according to claim 21, wherein a film thickness of the remaining conductive material is detected by a change in eddy current.

## FIG. 1A

## FIG. 1B

## FIG. 1C

## FIG. 1D

# FIG. 2

FIG. 3

## FIG. 4

# FIG. 5

# FIG. 6

## FIG. 7A

## FIG. 7B

## FIG. 7C

EP 1 894 656 A2

*FIG. 8A*

*FIG. 8B*

*FIG. 8C*

## FIG. 9A

(A)     (B)

barrier film

pH4

## FIG. 9B

(A)    (B)

barrier film

pH4.5

## FIG. 9C

(A)    (B)

barrier film

pH4.75

# FIG. 10

**(B)**

barrier film

p H4.3

## FIG. 11A

0.8 m/s
4 V

## FIG. 11B

0.8 m/s
3 V

## FIG. 12A

constant voltage (4V)

## FIG. 12B

voltage change after
beginning of
exposure of barreier film
(4V → 2V)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004141990 A
- JP 2005340600 A
- JP 2005518670 W
- US 20060006074 A